(19) Europäisches Patentamt
European Patent Office
Office européen des brevets

(11) **EP 3 945 531 B1**

(12) **FASCICULE DE BREVET EUROPEEN**

(45) Date de publication et mention de la délivrance du brevet:
**30.08.2023 Bulletin 2023/35**

(21) Numéro de dépôt: **21187543.0**

(22) Date de dépôt: **23.07.2021**

(51) Classification Internationale des Brevets (IPC):
**G21C 9/00** *(2006.01)*     **G21C 15/18** *(2006.01)*

(52) Classification Coopérative des Brevets (CPC):
**G21C 9/00; G21C 15/18;** Y02E 30/00; Y02E 30/10; Y02E 30/30

(54) **RÉACTEUR ET PROCÉDÉ DE SÉCURITÉ POUR RÉACTEUR EN CAS DE FUSION DU COEUR**

REAKTOR UND SICHERHEITSVERFAHREN FÜR REAKTOR IM FALLE EINER KERNSCHMELZE

REACTOR AND SAFETY METHOD FOR REACTOR IN THE EVENT OF CORE MELTDOWN

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.07.2020 FR 2008045**

(43) Date de publication de la demande:
**02.02.2022 Bulletin 2022/05**

(73) Titulaire: **Commissariat à l'Energie Atomique et aux Energies Alternatives**
**75015 Paris (FR)**

(72) Inventeurs:
• **MORIN, Franck**
  **13100 AIX EN PROVENCE (FR)**
• **AVAKIAN, Gilles**
  **13012 MARSEILLE (FR)**

(74) Mandataire: **Hautier IP**
**20, rue de la Liberté**
**06000 Nice (FR)**

(56) Documents cités:
**EP-A1- 0 907 187**

# Description

## DOMAINE TECHNIQUE

L'invention concerne le domaine de la sûreté des centrales nucléaire et plus particulièrement la gestion des accidents graves des réacteurs nucléaires à eau pressurisée (REP). Plus spécifiquement encore, la présente invention s'applique à la gestion des accidents impliquant la formation d'un bain de corium en fond de cuve consécutivement à une situation d'entrée en accident grave, dans une stratégie de maintien ou rétention du corium en cuve.

## ÉTAT DE LA TECHNIQUE

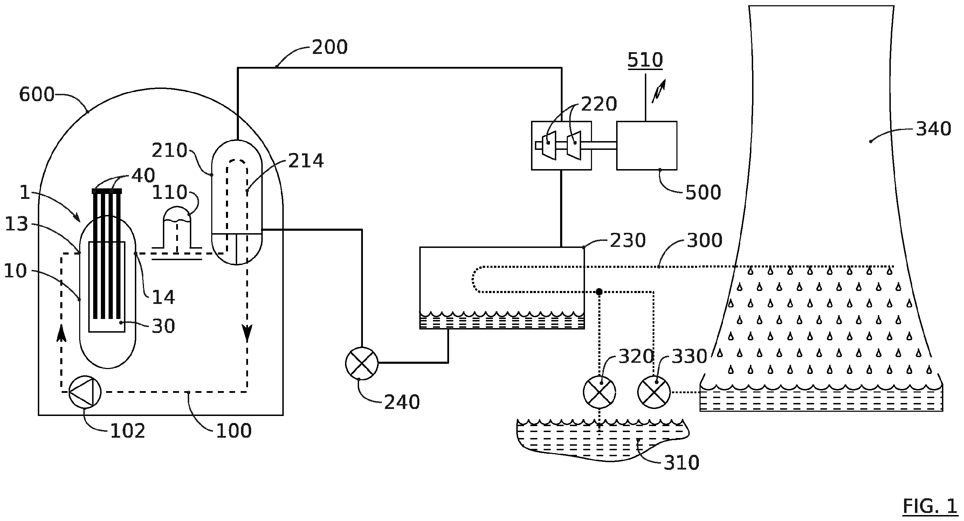

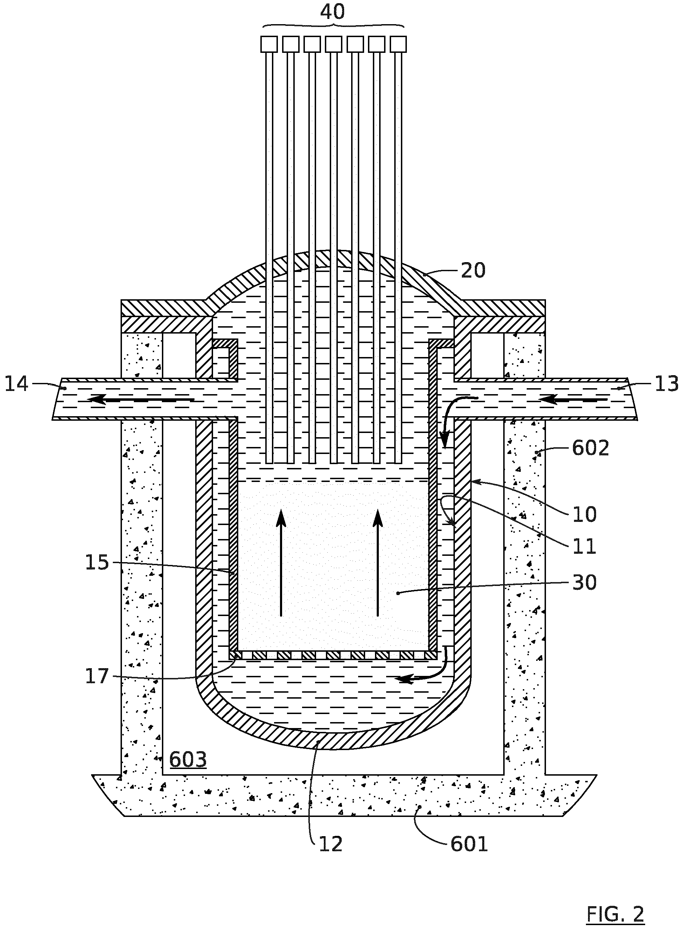

Une centrale nucléaire de type REP est illustrée en figures 1 et 2.

Une telle centrale comprend généralement une enceinte de confinement 600 à l'intérieur duquel est logé le réacteur 1. Le réacteur 1 comprend une cuve 10 formant avec un couvercle 20 une enceinte étanche. Cette enceinte étanche loge les assemblages combustibles du coeur 30. Sur la figure 2, par souci de clarté, le coeur est représenté par une zone en pointillés.

La cuve 10 comprend en outre au moins une entrée 13, dite froide, de fluide connectée à circuit primaire 100 et au moins une sortie 14, dite chaude, également connectée au circuit primaire 100. De l'eau pressurisée circule dans le circuit primaire 100.

En fonctionnement normal du réacteur 1, le circuit primaire 10 assure ainsi le transport de la chaleur du coeur 30 vers un circuit secondaire 200 à l'intérieur duquel circule également de l'eau.

Le circuit secondaire 200 comprend un et de préférences plusieurs générateurs de vapeur 210. L'échange de chaleur entre le circuit primaire 100 et les circuits secondaires 200 s'effectue à l'intérieur des générateurs de vapeur 210. Sur l'exemple illustré en figure 1, une boucle 214 du circuit primaire 100 est illustrée dans le générateur de vapeur 210.

Les schémas simplifiés des figures 1 et 2 illustrent d'autres éléments parfaitement classiques d'un circuit primaire 100 et d'un coeur 30 de réacteur 1 tels que : des barres 40 de commande, une pompe hydraulique 102 en entrée de cuve 10 pour faire circuler l'eau dans le circuit primaire 100, un pressuriseur 110 en sortie de cuve 10, une enceinte de confinement 600, et des structures formant un radier 601 et des parois 602 délimitant un puits 603 de cuve 10.

Toujours en fonctionnement normal du réacteur 1, lors de son passage dans le générateur de vapeur 210, une partie de l'eau du circuit secondaire 200 se vaporise et parvient dans un dispositif de conversion d'énergie telle qu'une turbine 220 entraînée en mouvement par la détente de la vapeur. L'énergie mécanique en sortie des turbines 220 est ensuite transformée en énergie électrique par des alternateurs 500 et des transformateurs 510 en vue de son acheminement vers des lieux de consommation.

Le fluide, en sortie des turbines 220 est condensé dans un condenseur 230 avant d'être réinjecté dans les générateurs de vapeur 210 par une pompe 240.

Afin de condenser la vapeur issue des turbines 220, le condenseur 230 est refroidi par un circuit 300 ouvert, alimenté par une source d'eau 310 telle qu'un fleuve. Ce circuit 300 comprend également des pompes de relevage 320, 330 et une tour de refroidissement 340.

Comme cela apparaît clairement sur le schéma de la figure 1, l'eau du circuit primaire 100 a pour fonction d'extraire les calories générées par le réacteur 1 afin de les transférer au circuit secondaire 200, en vue de leur transformation en électricité à l'aide système de conversion d'énergie qu'est le turbo alternateur. En fonctionnement normal, le coeur 30 est critique, et la puissance thermique produite est évacuée par le circuit primaire 100. Le contrôle de la criticité du coeur est assuré à la fois par la position de barres de contrôle 40 dans le coeur 30, mais aussi par une teneur en bore soluble dans l'eau du circuit primaire.

Différents scenarii accidentels comme un accident de perte de réfrigérant primaire de type grosse brèche, combinés à des facteurs aggravants de non fonctionnement de systèmes de secours classés, sont susceptibles de conduire à une situation d'entrée en accident grave.

Dès lors, il s'ensuit que le coeur 30 entre dans un état de fusion avec génération de corium. Le corium est un ensemble partiel ou total de combustibles fondus et d'internes de cuve 10 à l'état de fusion. Le corium s'écoule par gravité dans le fond 12 de la cuve 10 et y forme un bain. Le corium possède donc tout ou partie de l'inventaire de combustible fondu, contenant l'ensemble des produits de fission solides et la puissance thermique résiduelle associée.

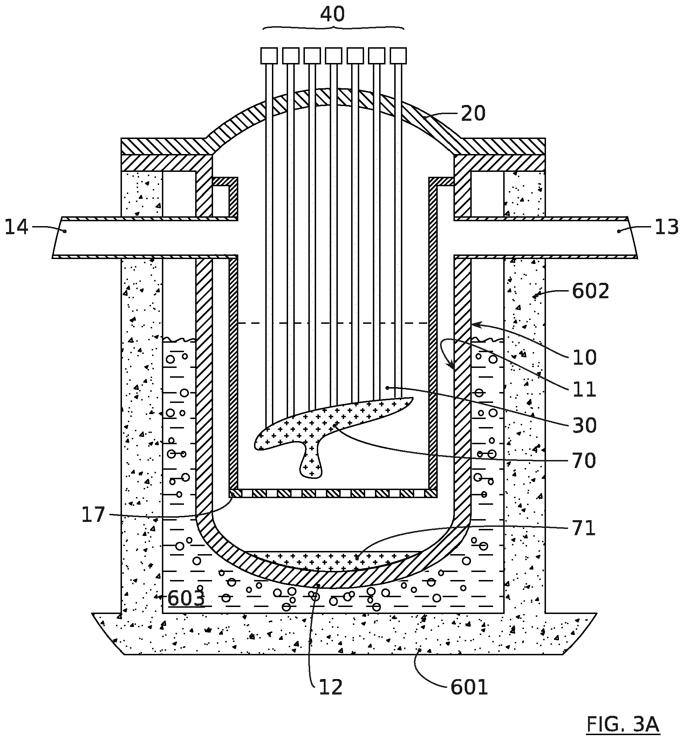

Les figures 3A à 3C illustrent, de manière très schématisée, un accident grave d'une cuve REP avec formation d'un bain de corium puis percement de la cuve.

Sur la figure 3A, on a illustré la désagrégation et la fusion partielle du coeur 30, la formation de corium 70 et l'apparition d'un bain 71 de corium 70 en fond 12 de cuve 10. De manière connue, lors de la formation du bain 71 de corium 70 une couche 72 superficielle de métal liquide apparaît sur la surface libre du bain 71. Une partie de la puissance thermique du bain 71 de corium 70 est transmise à cette couche 72.

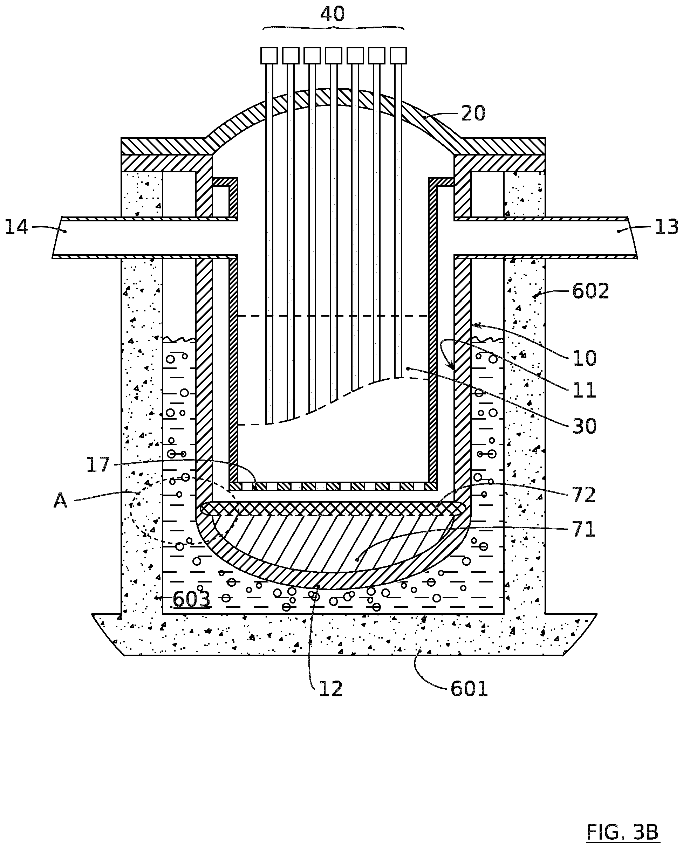

La figure 3B illustre, de manière très schématisée l'apparition de cette couche 72 métallique (dont l'épaisseur est volontairement exagérée par souci de clarté). La zone référencée A illustre le début du percement de la cuve 10 par la couche 72 métallique. Ce percement de la cuve 10 est engendré par un phénomène habituellement qualifié par son vocable anglais de « focusing effect » (effet de focalisation). La couche métallique 72 est très conductrice thermiquement et absorbe une grande partie de l'énergie thermique du bain de corium 71. Le focusing effect correspond à une situation dans laquelle la couche métallique 72 transfert par conduction une partie de sa chaleur sur une faible surface des parois latérales 11 de la cuve 10. Cette focalisation de puissance thermique sur une faible surface peut entrainer le percement des parois 11 de la cuve 10.

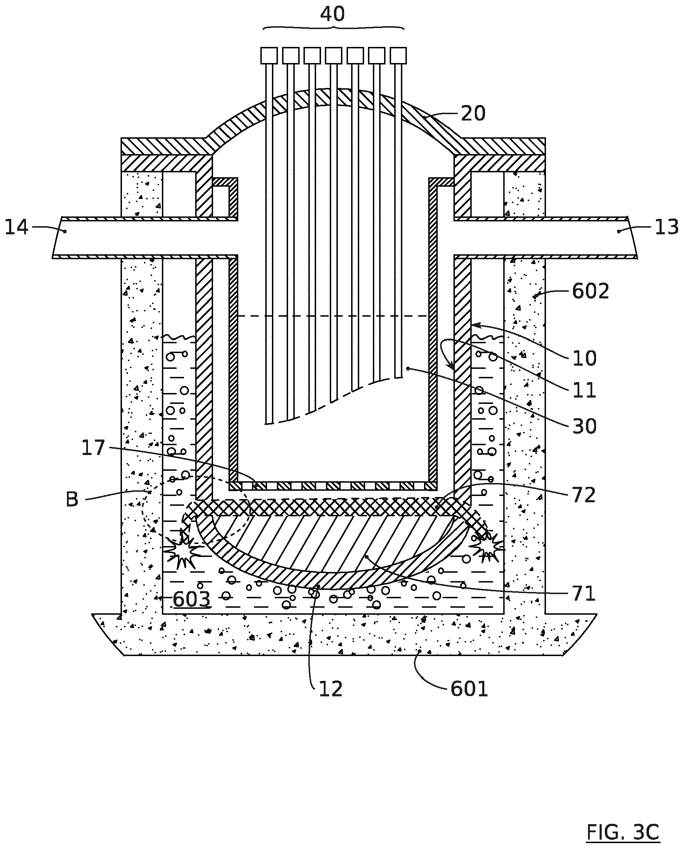

La figure 3C illustre l'achèvement du percement de la cuve 10. Le corium 70 se déverse alors dans le puits 603 de cuve 10. Par ailleurs, lors du contact direct entre le corium et l'eau de refroidissement contenu dans le puits 603 il peut se produire des explosions appelées explosions vapeur (détente brutale de l'eau et dilatation vapeur), et la création d'hydrogène. Ces conséquences sont inacceptables en termes de risque de rupture de la troisième barrière de confinement formée par l'enceinte réacteur 600. Le risque de percement de cuve, en situation de puits 603 de cuve 10 noyé, doit être éliminé. De plus, il est essentiel d'éviter les disséminations incontrôlées du corium 70, matière hautement radioactive et présentant une puissance thermique très élevée. Une dissémination du corium 70 au niveau du radier 601 engendre un risque de percement de ce dernier et une propagation jusqu'à des zones phréatiques potentielles

Deux modes de gestion du corium en cas d'Accident Grave de REP existent suivant les concepteurs de chaudière nucléaire de REP. Une première famille de solutions, désignée Ex Vessel Rétention (signifiant rétention à l'extérieur de la cuve), consiste à laisser le corium 70 percer la cuve 10, en situation de circuit primaire dépressurisé, et s'écouler dans une zone dédiée à l'étalement du corium et à la gestion de son refroidissement. Ce type de solutions présente comme inconvénient de nécessiter une plateforme imposante de réception et d'étalement de corium appelée récupérateur, ce qui alourdit nettement le génie civil et le coût d'infrastructure de l'enceinte réacteur. Un autre inconvénient important concerne la démonstration d'intégrité de la troisième barrière de confinement formée par l'enceinte réacteur, pour éviter la contamination de l'environnement, puisque la barrière de confinement formée par le circuit primaire a été rompue.

Une deuxième famille de solutions, désignée In Vessel Rétention (signifiant rétention à l'intérieur de la cuve) ou par son acronyme IVR, consiste à déployer des systèmes pour maintenir le corium 70 à l'intérieur de la cuve 10 en évitant le percement de cette dernière.

Dans cette famille de solutions, une des stratégies vise à maintenir le corium 70 dans la cuve 10 et à extraire sa puissance résiduelle à travers la paroi de la cuve 10 au moyen d'un refroidissement externe, notamment par la mise en place d'une boucle de convection (naturelle ou forcée), après le noyage du puits 602 de cuve 10.

Ce type de solution est par exemple décrit dans le document WO2009/053322. Dans ce document, une pompe située en fond de cuve permet d'augmenter la convection forcée de l'eau située dans le puits 603 de cuve au contact de la paroi externe de la cuve 10.

Une circulation naturelle de l'eau au contact de la cuve, puis vaporisée et recondensée en partie supérieure de l'enceinte peut également être mise en place. Ce type de solution est proposé comme gestion d'évacuation de la puissance résiduelle en accident grave dans le réacteur AP1000 de la société Westinghouse™. Ce moyen de refroidissement est entièrement passif, contrairement à la solution décrite dans le document WO2009/053322.

Par ailleurs, suivant les hypothèses considérées concernant l'épaisseur de la couche 72 métallique à l'origine du focusing effect, il demeure une probabilité réelle de ne pas atteindre des performances de refroidissement suffisantes pour éviter le percement de la cuve. C'est pourquoi généralement, même dans le cadre d'une gestion IVR de l'accident grave, des dispositifs complémentaires de traitement du risque hydrogène, et une étude de limitation des conséquences de l'explosion vapeur est décrite, avec des moyens additionnels prévus, pour traiter l'hypothèse défavorable de percement de cuve.

Une stratégie IVR, décrite dans le document FR2763168 consiste à prévoir, dans le fond de la cuve, un dispositif de récupération du corium. Le corium s'écoule par gravité depuis le coeur jusque dans ce récupérateur. On prévoit par ailleurs une injection d'eau par gravité par un réservoir supplémentaire connecté au puits de cuve.

Cette solution présente pour inconvénient de nécessiter la présence d'un système additionnel formé par le récupérateur, ce qui alourdit et augmente nettement la taille de la cuve réacteur. De plus, les moyens d'injection d'eau en cuve formés par le réservoir directement connecté au circuit primaire ne sont qu'un moyen d'injection de sûreté complémentaire de ceux déjà présents pour le traitement des accidents de dimensionnement. La pression primaire résiduelle existante à l'entrée de l'accident grave nécessite de prévoir une hauteur gravitaire importante de ce réservoir, ce qui alourdit considérablement le génie civil.

Par conséquent, les quelques solutions qui ont été proposées pour gérer le refroidissement du corium, présentent toutes des inconvénients. Il existe un besoin consistant à proposer une solution limitant, voire supprimant au moins certain de ces inconvénients. Tel est un objectif de la présente invention.

Un autre objectif de la présente invention consiste à réduire voire à éliminer le risque de percement de la cuve par focusing effect.

## RÉSUMÉ

Pour atteindre au moins l'un de ces objectifs, la présente invention prévoit un procédé de sécurité pour réacteur nucléaire à eau pressurisée en cas de fusion au moins partielle d'un coeur du réacteur avec formation d'un bain de corium, le réacteur comprenant au moins, lors d'une phase de fonctionnement :

- un circuit primaire dans lequel est destiné à circuler un fluide primaire à base d'eau, le circuit primaire étant configuré pour que le fluide primaire pénètre dans une cuve du réacteur et traverse le coeur contenu dans la cuve afin d'extraire de la chaleur produite par le coeur,
- un circuit secondaire, dans lequel est destiné à circuler un fluide secondaire à base d'eau, le circuit secondaire étant hydrauliquement isolé du circuit primaire, et comprenant au moins un générateur de vapeur, le circuit secondaire étant configuré pour absorber de la chaleur du circuit primaire et la transformer en partie au moins en vapeur dans le générateur de vapeur.

Le procédé comprend au moins l'étape suivante. En réponse à une détection d'un événement caractéristique d'une fusion au moins partielle du coeur du réacteur avec formation d'un bain de corium dans un fond de la cuve et avec une formation d'une couche métallique liquide à la surface du bain de corium, le procédé prévoit de mettre en communication fluidique le circuit secondaire avec le circuit primaire de sorte que le fluide secondaire emprunte le circuit primaire de préférence par le côté branche froide, pour s'écouler à l'intérieur de la cuve sur ladite couche métallique liquide du bain de corium.

Ainsi, le fluide secondaire sous pression, typiquement de l'eau à pression et température de saturation, contenue dans le circuit secondaire et en particulier dans le ou les générateurs de vapeur s'écoule dans le fond de la cuve sur la couche métallique.

Cette injection de réfrigérant s'effectue donc de manière passive puisque l'eau du circuit secondaire est à une pression supérieure de celle du circuit primaire.

Typiquement, la pression de l'eau contenue dans un générateur de vapeur est de l'ordre de 60 à 70 bars, alors que celle du circuit primaire est typiquement inférieure à 20 bars en entrée de situation d'Accident Grave.

En un temps court, l'eau du circuit secondaire commence à entrer au contact de la couche de métal liquide en surfusion entraînant une réduction drastique du flux thermique à l'origine du percement par focusing effect. Tout ou partie de l'eau provenant du circuit secondaire se vaporise au contact de la couche de métal liquide et du bain de corium, par ruissellement le long de la cuve réacteur côté branche froide, avantageusement le long d'un volume habituellement qualifié de downcomer.

L'eau provenant du circuit secondaire s'écoule pendant une durée suffisamment longue pour refroidir la couche de métal liquide au moins pendant toute la durée au cours de laquelle cette couche de métal liquide présente une épaisseur suffisamment faible pour générer un risque de percement de la cuve. On peut ainsi qualifier cet écoulement de contrôlé. En revanche, le débit du flux s'écoulant sur la couche métallique liquide n'a pas besoin d'être très important.

Une façon de gérer ce débit et cette durée d'injection de l'eau du circuit secondaire dans la cuve est de calibrer précisément la section de la ou des brèches ouvertes entre le circuit secondaire et le circuit primaire.

À titre d'exemple non limitatif, le débit d'eau secondaire entrant dans la cuve est celui correspondant à une brèche d'environ 20mm de diamètre et plus généralement entre 10 et 30 mm.

L'intégralité de l'eau contenue dans un ou plusieurs générateurs de vapeur (GV) s'écoule alors progressivement dans la cuve réacteur. La valeur typique de débit liquide entrant dans le circuit primaire depuis le circuit secondaire est d'environ 5 kg/s. À titre d'exemple non limitatif, ce débit est plus généralement compris entre 2 kg/s et 10 kg/s. Cette valeur est drastiquement plus faible que toutes les injections de sûreté destinées à renoyer le coeur. Le procédé selon l'invention permet ainsi à la fois une longue durée de mission de transfert d'eau des GV vers la zone de potentiel percement de la cuve par focusing effect, mais également une forte limitation de la vapeur créée par l'interaction eau/métal liquide, ce qui limite la surpression du circuit primaire.

À titre également d'exemple non limitatif, la durée d'injection de l'eau du circuit secondaire dans la cuve est de l'ordre de trois heures et plus généralement entre 30 min et 5 heures. À titre de comparaison, dans une solution qui consisterait à renoyer le coeur en déversant dans la cuve l'eau du circuit secondaire, la durée d'injection serait d'environ une minute à quelques minutes.

La quantité d'eau par générateur de vapeur disponible suivant les scenarii accidentels varie entre 29 tonnes et 70 tonnes par générateur de vapeur pour un réacteur de puissance 1300 MWe (type Palier N4 du parc français).

Par rapport à l'échelle de temps d'un accident grave et plus particulièrement par rapport à l'échelle de temps de la fusion du coeur et de la formation de corium, le temps pendant lequel l'eau du circuit secondaire s'écoule sur le bain de corium est court en mettant en oeuvre le procédé selon l'invention.

Néanmoins, dans le cadre du développement de la présente invention, il a été observé que cette durée est suffisante pour réduire très significativement, voire pour éliminer le risque de percement de la cuve par focusing effect.

En effet, il a été remarqué que la période de temps au cours de laquelle le focusing effect peut entraîner le percement de la cuve est relativement limitée. Il a été observé que le risque de percement dû au focusing effect correspond à une plage de temps où le bain de corium possède une couche métallique liquide en surface d'une épaisseur relativement fine, typiquement de quelques centimètres. Dans cette configuration, une partie importante de la puissance thermique issue du bain corium est transmise à cette couverture métallique fine, puissance qui est alors transmise par contact à la paroi interne de la cuve, et induit le percement progressif de cette dernière.

Au cours du temps, le bain de corium continue à être alimenté par les éléments internes à la cuve qui fondent progressivement, et la couche de métal liquide en surface s'épaissit, du fait de l'inventaire de métal fondu qui augmente. La surface de contact entre la couche de métal liquide et la paroi interne de la cuve augmente. La puissance thermique transmise à cette couche se répartit alors dans une épaisseur plus grande de la couche métallique liquide, et la puissance de percement de cuve est alors moins focalisée. Le risque de percement de cuve devient alors plus faible.

Une fois que tout l'inventaire de métal interne est fondu, l'épaisseur de la couche métallique de surface est alors telle que la puissance thermique en périphérie et au contact avec la cuve n'est plus suffisante pour percer la cuve. Généralement, à ce stade, le refroidissement externe de la cuve est suffisamment performant pour évacuer la puissance thermique issue du bain. Le percement de cuve est alors définitivement stoppé.

Pour exemple, si 3 MWth sont transmis à une couche métallique de 10 cm d'épaisseur et de 12 m de périphérie, sans possibilité d'évacuation thermique par la surface supérieure, il y aura alors un flux thermique appliqué à la cuve de $3/1.2 = 2.5 \, MW/m^2$. Un tel flux n'est pas évacuable par refroidissement externe classique lorsque la cuve est noyée dans un puits de cuve inondé. L'excès de puissance thermique transmis à la cuve se transforme alors en chaleur de fusion de la cuve elle-même et le percement de la cuve se poursuit depuis l'intérieur. Lorsque la couche métallique liquide atteint une épaisseur double ou triple, le flux est alors réduit d'autant, et le refroidissement externe devient alors suffisant pour stopper la progression du percement de la cuve puisque l'ensemble de la puissance thermique issu du bain est évacué jusqu'à l'eau externe, sans provoquer de fusion du métal de cuve.

Lorsque l'eau liquide secondaire arrive au contact de la couche de métal liquide depuis les branches froides du circuit primaire, de préférence à l'endroit du percement de cuve, c'est-à-dire en périphérie du downcomer comme cela sera décrit en détail par la suite, chaque kilogramme d'eau par seconde qui s'évapore induit un refroidissement d'environ 2 à 3 MWth de la couche liquide. Avec un débit d'environ 5 kg/s sur une période d'environ 3 heures, le refroidissement de la couche de métal liquide correspond à une évacuation de puissance thermique d'environ 10 à 15 MWTh pendant trois heures, ce qui réduit drastiquement voire empêche le percement de la cuve.

De plus, à partir d'une certaine hauteur de bain corium, la couche superficielle de métal liquide entre en contact avec la plaque support coeur, illustrée en figures 2 et 3A par la référence 17. La température de métal liquide surchauffé par la puissance thermique du bain de corium se réduit alors drastiquement par la fusion significative de la partie inférieure de la plaque support coeur. En effet, la température de fusion du métal est largement inférieure à celle susceptible d'être atteinte par la couche de métal liquide provoquant le focusing effect.

Ainsi, dans le cadre du développement de la présente invention, on s'est aperçu que l'on peut lutter efficacement contre le percement de la cuve par focusing effect en injectant une quantité d'eau avec un débit relativement faible à l'intérieur de la cuve. Le volume d'eau contenue dans les générateurs de vapeur est alors suffisant pour refroidir efficacement la couche de métal liquide pendant toute la durée au cours de laquelle la couche de métal liquide présente une épaisseur suffisamment faible pour que le phénomène de Focusing effect conduise au percement de la cuve.

De manière particulièrement avantageuse, l'invention ne nécessite pas de composants supplémentaires dans le réacteur, tel qu'un récupérateur, ou des systèmes additionnels dans le puits de cuve, tels que des moyens de convection forcée.

Par ailleurs, l'invention ne nécessite pas de réservoirs additionnels placés à une hauteur importante. Pour autant, en exploitant la pression du circuit secondaire, l'invention permet une injection d'eau dans la cuve très rapide.

En revanche il est nécessaire de prévoir un refroidissement de la paroi externe de la cuve, dans la configuration de maintien du corium en cuve, et refroidissement par noyage du puits de cuve.

La solution proposée permet donc, fonctionnement passif, c'est-à-dire sans pompe pour déverser sur le bain de corium un réfrigérant, un renforcement de la stratégie de gestion du corium en cuve, en luttant contre les effets du Focusing Effect susceptibles de mettre en échec le non percement de la cuve réacteur.

Par ailleurs, l'invention ne prévoit pas de composants supplémentaires ou de piquage directement sur la cuve du réacteur, ces derniers pouvant entraîner une baisse de la fiabilité de la sûreté du réacteur.

Ainsi, l'invention permet d'augmenter de manière considérable la sécurité d'un réacteur à eau pressurisée en cas de fusion du coeur avec formation d'un bain de corium.

L'invention porte également sur un réacteur à eau pressurisée comprenant au moins :

- une cuve logeant un coeur du réacteur, la cuve comprenant au moins une entrée et au moins une sortie,
- un circuit primaire dont au moins une première extrémité est connectée à l'entrée de la cuve et dont au moins une extrémité est connectée à la sortie de la cuve de sorte à ce qu'un fluide primaire, de préférence à base d'eau, circulant dans le circuit primaire pénètre dans la cuve du réacteur par ladite entrée et en ressorte par ladite sortie en passant à travers le coeur afin d'extraire de la chaleur produite par le coeur,
- un circuit secondaire, fluidiquement isolé du circuit primaire, dans lequel est destiné à circuler un fluide secondaire à base d'eau, et comprenant au moins un générateur de vapeur, le circuit secondaire étant configuré pour absorber de la chaleur du circuit primaire et la transformer en partie au moins en vapeur dans le générateur de vapeur.

Le réacteur comprend un système de sécurité comprenant un dispositif de sécurité configuré pour créer un passage, de préférence un unique passage, supprimant l'isolation fluidique entre le circuit secondaire et le circuit primaire et mettant en communication fluidique le fluide secondaire présent dans le générateur de vapeur avec le circuit primaire de sorte à ce que le fluide secondaire contenu dans le générateur de vapeur s'écoule dans un fond de la cuve en passant au préalable par le circuit primaire.

Ainsi, en cas d'activation du dispositif de sécurité lorsqu'un bain de corium se forme et qu'une couche métallique liquide apparaît à la surface du bain, le dispositif de sécurité en enclenché et le fluide secondaire sous pression contenu dans le générateur de vapeur se déverse dans le circuit primaire, avantageusement dans la ou les branches froides, puis dans la cuve. Ce fluide refroidit la couche métallique liquide, ce qui atténue le phénomène de focusing effect. On évite ainsi le percement de la cuve.

De manière particulièrement avantageuse, on remarque que la solution proposée ne prévoit aucun piquage direct du circuit secondaire sur la cuve réacteur, ce qui améliore la sûreté du réacteur.

Ce dispositif présente les avantages mentionnés précédemment à propos du procédé de l'invention. En particulier, il permet d'améliorer considérablement la sécurité du réacteur, sans complexifier, ni réduire le niveau de fiabilité de ce dernier.

Selon un exemple non limitatif, l'organe est une vanne prise parmi : une vanne une vanne à commande manuelle, une vanne pilotable à distance.

$S_{brèche}$ est la section minimale dudit passage qui permet l'injection, à l'intérieur du circuit primaire, du fluide secondaire présent dans l'au moins un générateur de vapeur.

Selon un exemple non limitatif $S_{brèche}$ est inférieure à 20cm$^2$ (10$^{-2}$ mètres).

Selon un exemple $S_{brèche}$ est supérieure à 2 cm$^2$, et de préférence $S_{brèche}$ est supérieure à 3 cm$^2$. Selon un exemple $S_{brèche}$ est compris entre 2 cm$^2$ et 20cm$^2$.

Selon un exemple, $S_{brèche}$ est comprise entre 0.2 cm$^2$ et 20 cm$^2$, de préférence 0.8cm$^2$ et 20 cm$^2$ et encore plus préférentiellement entre 2 cm$^2$ et 7 cm$^2$.

La section d'entrée côté branche froide de la cuve réacteur est très largement supérieure à la section de la brèche provoquée entre le circuit secondaire et le circuit primaire.

Typiquement, selon un exemple non limitatif : $S_{brèche}$ < 0.05 * $S_{entrée}$, de préférence $S_{brèche}$ < 0.01 * $S_{entrée}$, de préférence $S_{brèche}$ < 0.005 * $S_{entrée}$ et de préférence $S_{brèche}$ < 0.001 * $S_{entrée}$. $S_{entrée}$ est la section minimale du passage du fluide primaire dans le circuit primaire et jusque dans la cuve.

Si le circuit primaire comporte plusieurs entrées dans la cuve, ce qui est le cas lorsqu'il y a plusieurs générateurs de vapeur, alors la section $S_{entrée}$ est la somme des sections des entrées du circuit primaire jusque dans la cuve.

Typiquement, la section de passage du fluide primaire côté branche froide est de l'ordre de 6000 cm$^2$.

Typiquement lorsque Sentrée présente une section circulaire, Sentrée présente un diamètre compris entre 800 et 900mm (10$^{-3}$ mètres).

Ainsi, la section par laquelle le fluide secondaire s'écoule dans le circuit primaire est très inférieure à la section par laquelle le fluide primaire s'écoule habituellement dans la cuve. Ce rapport des sections $S_{brèche}$ et $S_{entrée}$ permet d'injecter dans le primaire et donc dans la cuve un débit de fluide secondaire pendant une période de temps relativement longue. Plus précisément pendant une période de temps suffisante pour couvrir la durée pendant laquelle l'épaisseur de la couche métallique liquide est suffisamment faible pour percer la paroi de la cuve par focusing effect.

Ces caractéristiques permettent de réduire, voire de supprimer le risque de percement de la cuve par focusing effect.

**BRÈVE DESCRIPTION DES FIGURES**

Les buts, objets, ainsi que les caractéristiques et avantages de l'invention ressortiront mieux de la description détaillée de modes de réalisation de cette dernière qui sont illustrés par les dessins d'accompagnement suivants dans lesquels :

La figure 1 schématise une centrale nucléaire de type REP.

La figure 2 illustre, de manière schématique, une coupe verticale d'une cuve de réacteur de type REP dans son puits de cuve dans un état de fonctionnement hors accident grave.

Les figures 3A à 3C illustrent, de manière schématique, différentes phases d'un accident grave entraînant la fusion partielle ou totale du coeur, la formation d'un bain de corium puis le percement de la cuve dans le réacteur illustré en figure 2 par focusing effect.

La figure 4 illustre, de manière schématique, la mise en oeuvre de l'invention avec le refroidissement du bain de corium par injection d'eau du circuit secondaire à travers le circuit primaire jusque dans le fond de la cuve

La figure 5 illustre, de manière très schématique, une portion de cuve et les paramètres permettant de positionner des fusibles le long d'une génératrice de la cuve.

La figure 6 illustre un exemple d'une portion de générateur de vapeur classique

La figure 7 illustre, de manière agrandie les liaisons hydrauliques entre la cuve et le générateur de vapeur selon un premier mode de réalisation de l'invention.

La figure 8 est une illustration schématique en coupe d'une variante du mode de réalisation illustré en figure 7.

La figure 9 illustre, de manière schématique, une implantation d'une centrale nucléaire intégrant un système de sécurité selon un troisième mode de réalisation de l'invention.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques. En particulier, les dimensions relatives des différents éléments constitutifs de la centrale, en particulier les dimensions relatives des éléments constituant le réacteur et ses conduites, de la couche métallique liquide, et des différents organes de la centrale ne sont pas représentatives de la réalité.

## DESCRIPTION DÉTAILLÉE

Avant d'entamer une revue détaillée de modes de réalisation de l'invention, plusieurs caractéristiques et techniques sont mentionnées ci-dessous, étant rappelé que la portée de la protection est définie par les revendications.

Selon un exemple, ladite détection de la formation d'une couche métallique liquide à la surface du bain de corium est effectuée à l'aide d'au moins un fusible disposé sur une paroi de la cuve, l'au moins un fusible étant configuré pour fondre lorsqu'il est atteint par la couche métallique liquide.

Selon un exemple, l'au moins un fusible présente une température de fusion du fusible supérieure ou égal à un seuil de température Tf, avec Tf $\geq$ 400°C, de préférence Tf $\geq$ 500°C et de préférence Tf=600°C.

Selon un exemple, le réacteur comprend plusieurs fusibles répartis selon au moins une génératrice d'une paroi de la cuve de sorte que deux fusibles voisins définissent une tranche de cuve, les volumes $V_{tranche}$ des tranches étant identiques.

Selon un exemple, la mise en communication fluidique du circuit secondaire avec le circuit primaire est déclenchée en fonction de la détection, par exemple à l'aide d'au moins un fusible, d'une température de paroi interne de la cuve supérieure à un seuil de température Tf, avec Tf supérieure à 400°C et de préférence Tf supérieure à 500°C.

Selon un exemple non compris dans la portée des revendications, on détermine un profil d'évolution de la hauteur de la couche métallique liquide dans la cuve à partir de fusibles disposés sur une paroi interne de la cuve et disposés de préférence selon au moins deux génératrices de cette paroi. On détermine, en fonction de ce profil, l'instant auquel il convient de déclencher la mise en communication fluidique du circuit secondaire avec le circuit primaire.

Selon un exemple, on dispose sur une face interne de la paroi de la cuve une série de fusibles. De préférence les fusibles sont placés sur une génératrice du fond de la cuve et d'une paroi latérale de la cuve. La progression de montée du niveau de corium, ainsi que le début de dégradation de la cuve par la couche de métal liquide superficielle est détectée par la désactivation successive des fusibles de cette génératrice. A partir d'une certaine hauteur de corium, l'activation de la communication fluidique est activée.

Selon un exemple non compris dans la portée des revendications, le réacteur comprend au moins un fusible sur une paroi de la cuve. Le fusible est configuré pour, lorsque la couche métallique liquide atteint le fusible elle fasse fondre ce dernier. La température de fusion du fusible est par exemple supérieure ou égal à un seuil de température Tf, avec Tf $\geq$ 350°C, de préférence Tf $\geq$ 450°C et de préférence Tf=600°C.

Selon un exemple, le réacteur, comprend plusieurs fusibles répartis selon au moins une génératrice d'une paroi de la cuve. Les fusibles sont disposés le long d'une génératrice de sorte que si le volume de la couche métallique liquide augmente avec une vitesse constante, les intervalles de temps séparant les moments auxquels deux fusibles successifs d'une génératrice sont atteints par la couche métallique liquide restent constants.

Selon un exemple non compris dans la portée des revendications, le fluide secondaire s'écoule à l'intérieur de la cuve sur la couche métallique liquide au moins pendant toute une durée au cours de laquelle la couche métallique liquide présente une épaisseur $e_{72}$ suffisamment faible pour percer au moins partiellement une paroi interne de la cuve.

Selon un exemple, le fluide secondaire s'écoule à l'intérieur de la cuve sur la couche métallique liquide pendant au moins trente minutes et de préférence pendant au moins une heure et de préférence pendant au moins deux heures.

Selon un exemple non compris dans la portée des revendications, le débit d'eau secondaire s'écoule dans le circuit primaire en passant au travers d'un passage dont la section minimale $S_{brèche}$ est comprise entre 0,2 cm$^2$ (0,2.10$^{-4}$ m$^2$) et 20 cm$^2$ et de préférence entre 0,8 cm$^2$ et 7 cm$^2$. Si la section minimale $S_{brèche}$ de ce passage est circulaire, alors son diamètre est compris entre 5 et 50 mm et de préférence entre 10 et 30 mm. Typiquement, ce diamètre est d'environ 20mm.

Selon un exemple, le fluide secondaire s'écoule à l'intérieur de la cuve (10) avec un débit inférieur à 10 kg/s (10$^3$ grammes/secondes) et de préférence inférieur à 7 kg/s.

Selon un exemple, le réacteur comprend une enveloppe interne, située à l'intérieur de la cuve, enveloppant le coeur et définissant avec une paroi interne de la cuve un volume annulaire dit downcomer, le downcomer étant configuré de sorte à ce que, lors du fonctionnement normal du réacteur :

l'entrée débouche à l'extérieur de l'enveloppe et dans le downcomer afin que le fluide primaire en provenance de l'entrée soit guidé jusque dans le fond de la cuve,

la sortie débouche à l'intérieur de l'enveloppe afin que le fluide primaire présent dans le coeur puisse sortir du réacteur par la sortie.

Le réacteur est configuré de sorte à ce que, lorsque le dispositif de sécurité crée l'au moins un passage supprimant l'isolation fluidique entre le circuit secondaire et le circuit primaire, le fluide secondaire contenu dans le générateur de vapeur s'écoule dans un fond de la cuve en passant au préalable par ladite entrée de la cuve puis par le downcomer.

Ce mode de réalisation favorise un ruissellement de l'eau secondaire sur les parois internes de la cuve. Cela permet de refroidir la couche métallique liquide bien plus efficacement que si le fluide secondaire pénétrait dans la cuve depuis la sortie de cette dernière, ou côté branche chaude, donc sans passer par le downcomer. En effet, en ruisselant côté downcomer, l'évaporation de l'eau secondaire, et donc le refroidissement de la couche de métal liquide, se produit dans la zone où le percement de cuve se situe. Pour atteindre ce mode de réalisation, la connexion côté secondaire doit être effectuée côté branche froide du générateur de vapeur, c'est-à-dire du côté de l'échangeur où la température primaire correspond au retour froid du circuit primaire (boîte à eau froide).

Selon un exemple, le réacteur comprend au moins un fusible disposé sur une paroi de la cuve, le fusible étant configuré pour, lorsque la couche métallique liquide atteint le fusible elle fasse fondre ce dernier, la température de fusion du fusible étant supérieure ou égal à un seuil de température Tf, avec Tf $\geq$ 400°C, de préférence Tf $\geq$ 500°C et de préférence Tf=600°C.

Selon un exemple, le réacteur comprenant plusieurs fusibles répartis selon au moins une génératrice d'une paroi de la cuve, les fusibles sont répartis le long d'une génératrice de sorte que deux fusibles voisins selon cette génératrice, définissent une tranche de cuve, les volumes Vtranche des tranches sont identiques.

Selon un exemple non compris dans la portée des revendications, le générateur de vapeur comprend une enveloppe enfermant du fluide secondaire et du fluide primaire, l'enveloppe enfermant une isolation isolant fluidiquement les fluides secondaire et primaire, le système de sécurité étant configuré pour supprimer l'isolation entre les fluides secondaire et primaire à l'intérieur de l'enveloppe du générateur de vapeur, créant ainsi ledit passage. La suppression de cet isolement correspondant à une brèche de diamètre limité et contrôlé (typiquement 20mm de diamètre).

Selon un exemple le générateur de vapeur comprend une enveloppe externe comprenant une première partie enfermant du fluide primaire et une deuxième partie enfermant du fluide secondaire, les première et deuxième parties étant fluidiquement isolées.

Le système de sécurité comprenant au moins un conduit situé à l'extérieur du générateur de vapeur, le conduit formant ledit passage, et présentant au moins :

- une première extrémité débouchant sur la deuxième partie enfermant le fluide secondaire,
- une deuxième extrémité débouchant dans une branche du circuit primaire située entre le générateur de vapeur et la cuve.

Le dispositif de sécurité comporte au moins un organe monté sur ledit conduit et présentant sélectivement :

- une configuration fermée dans laquelle il empêche le passage du fluide dans ledit canal,
- une configuration ouverte dans laquelle il autorise le passage du fluide dans ledit conduit, permettant ainsi au fluide secondaire du générateur de vapeur de s'écouler dans ledit conduit pour rejoindre le circuit primaire puis la cuve.

Selon un exemple la deuxième extrémité du conduit forme un piquage sur une ligne de tuyauterie connectée à une branche du circuit primaire.

Selon un exemple ladite branche du circuit primaire s'étend entre le générateur de vapeur et l'entrée de la cuve.

Selon un exemple, le réacteur comprend un dispositif pris parmi une ligne d'injection de sécurité (IS) et une ligne d'un circuit de contrôle volumétrique et chimique (RCV), ledit dispositif étant configuré pour déboucher dans le circuit primaire au niveau de ladite deuxième extrémité du conduit.

Selon un exemple le générateur de vapeur comprend une première partie enfermant du fluide primaire et une deuxième partie enfermant du fluide secondaire, les première et deuxième parties étant fluidiquement isolées.

Le réacteur comprend en outre, un dispositif de refroidissement du réacteur à l'arrêt RRA, le dispositif de RRA comprenant au moins un premier circuit comprenant un échangeur et des branches reliant fluidiquement l'échangeur à une ou plusieurs portions du circuit primaire,

Selon un exemple, le système de sécurité comprenant au moins un conduit situé à l'extérieur du générateur de vapeur, le conduit formant ledit passage et présentant au moins :

- une première extrémité débouchant dans la deuxième partie enfermant le fluide secondaire,
- une deuxième extrémité débouchant dans une branche dudit premier circuit du dispositif de RRA.

Le dispositif de sécurité comporte au moins un organe monté sur ledit conduit et présentant sélectivement :

- une configuration fermée dans laquelle il empêche le passage du fluide dans ledit conduit,
- une configuration ouverte dans laquelle il autorise le passage du fluide dans ledit conduit, permettant ainsi au fluide secondaire du générateur de vapeur de s'écouler dans ledit conduit pour rejoindre une branche dudit premier circuit, puis le circuit primaire puis la cuve.

Ce mode de réalisation présente pour avantage d'éviter tout piquage sur le circuit primaire. Ce qui augmente encore la sûreté du réacteur.

Selon un exemple non compris dans la portée des revendications, le dispositif de sécurité est configuré pour que le fluide secondaire contenu dans le générateur de vapeur s'écoule dans la cuve avec un débit compris entre 4 et 5 kg/s pour une pression du générateur de vapeur de l'ordre de 68 bars.

Ainsi, même avec une quantité limitée de fluide de refroidissement, on parvient à enrayer le phénomène de focusing effect et à éviter le percement de la cuve.

Les termes « sensiblement », « environ », « de l'ordre de » signifient en tenant compte des tolérances de fabrication et/ou de mesure et peuvent notamment correspondre « à 10% près ».

Dans la suite de la description, on qualifie de fonctionnement normal du réacteur 1 ou de la centrale, une phase de fonctionnement en l'absence d'accidents ou d'accidents graves. Un accident de type accident de perte de réfrigérant primaire grosse brèche ou très grosse brèche, ne constitue pas une phase de fonctionnement normal du réacteur 1.

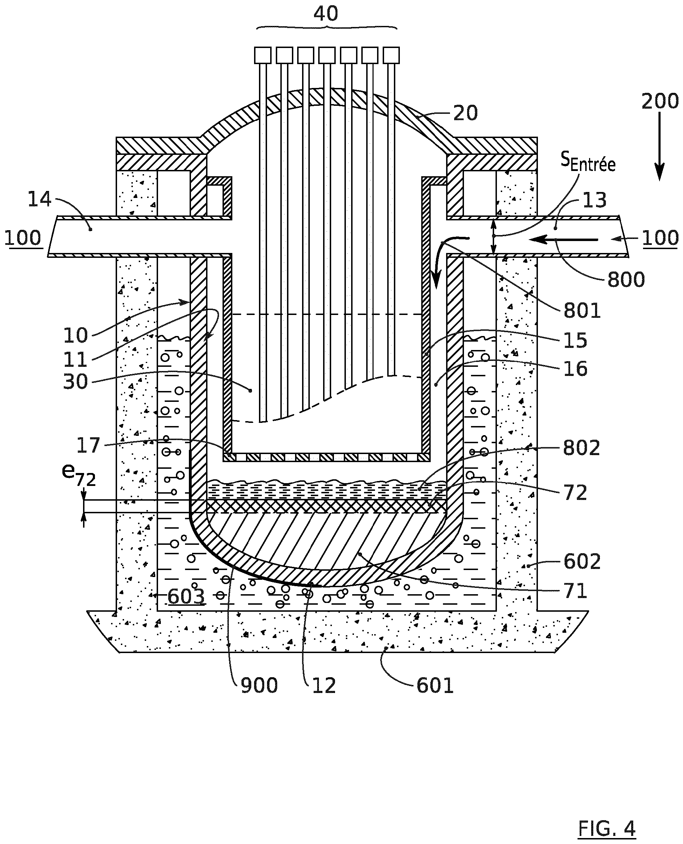

L'invention va maintenant être décrite en détail en référence aux figures 4 à 9.

La figure 4 illustre un réacteur 1, par exemple du type de celui décrit en référence aux figures 2 à 3A.

Toutes les caractéristiques décrites en référence aux figures 2 à 3A sont applicables aux modes de réalisation illustrés en figure 4. Sur cette figure 4, le coeur 30 est fondu ou partiellement fondu. Un bain 71 de corium 70 se forme dans le fond 12 de la cuve 10. À la surface du bain 71, la couche 72 de métal liquide se forme ou s'apprête à se former.

Avant que cette couche 72 de métal liquide commence à percer la cuve 10 ou rapidement après le début de ce percement partiel, on prévoit de déverser dans le fond 12 de la cuve 10, et donc sur cette couche 72, un fluide de refroidissement.

Ce fluide de refroidissement parvient depuis les entrées 13 et/ou les sorties 14 du circuit primaire 100.

Comme cela est sera expliqué par la suite en détail, ce fluide de refroidissement est constitué par de l'eau du circuit secondaire 200 qui s'écoule dans le circuit primaire 100.

On notera qu'en situation d'accident grave, de manière classique, on déclenche une dépressurisation du circuit primaire 100. Cela peut être effectué en ouvrant une vanne spécifique située par exemple en haut du pressuriseur 110. Cette dépressurisation du circuit primaire peut être déclenchée dès lors qu'une température seuil est atteinte, par exemple une température de gaine d'assemblage qui atteindrait 650°C ou plus. Cette dépressurisation du circuit primaire 100 fait que ce dernier présente une pression inférieure à celle du circuit secondaire 200. Typiquement, la pression dans le circuit primaire 100 dépressurisé est inférieure à 20 bars. Sous l'effet du différentiel de pression entre les circuits primaire 100 et secondaire 200, la mise en communication de ces circuits 100, 200 provoque une injection rapide du fluide du circuit secondaire 200 dans le circuit primaire 100.

Selon un mode de réalisation particulièrement avantageux, le fluide 800 du circuit secondaire 200 se déverse dans le circuit primaire 100 et parvient à l'intérieur de la cuve 10 par l'entrée 13. De préférence, le réacteur 1 comprend une enveloppe interne 15, située à l'intérieur de la cuve 10, enveloppant le coeur 30 et définissant avec la paroi interne 11 de la cuve 10 un volume annulaire habituellement qualifié par son vocable anglais downcomer 16 (portion de descente). Cette enveloppe interne 15 est configurée de sorte à ce que, lors du fonctionnement normal du réacteur 1 (c'est-à-dire en l'absence d'accident grave par exemple) :

- l'entrée 13 débouche à l'extérieur de l'enveloppe 15 et dans le downcomer 16 afin que le fluide froid en provenance de l'entrée 13 soit guidé jusque dans le fond 12 de la cuve 10.

- la sortie 14 débouche à l'intérieur de l'enveloppe 15 afin que le fluide chaud présent dans le coeur 30 puisse sortir du réacteur 1 par la sortie 14.

Ainsi, en fonctionnement normal du réacteur 1, le fluide froid du circuit primaire 100 pénètre dans le réacteur 1 par l'entrée 13 ; descend par gravité dans le downcomer 16 pour atteindre le fond 12 de la cuve, remonte à l'intérieur de l'enveloppe 15 en passant par une plaque ajourée habituellement désignée plaque support 17; traverse le coeur 30 pour extraire la chaleur issue de la fission et ressort du réacteur 1 par la sortie 14.

Dans le cadre de la mise en oeuvre de la présente invention, le fluide de refroidissement issu du circuit secondaire 200 et qui pénètre 801 dans la cuve 10 via le circuit 100 descend donc également dans le long de la paroi 11 de la cuve 10 et atteint la couche de métal 72 liquide. Ce fluide de refroidissement de secours emprunte donc le cheminement naturel de l'eau dans le réacteur 1. Ce fluide de refroidissement entre au contact de la surface de la couche 72 de métal liquide. Plus précisément, le fluide de refroidissement parvient sur la couche 72 de métal liquide à l'emplacement le plus critique, i.e., à l'interface entre cette dernière et la paroi 11 de la cuve 10. Le fluide de refroidissement assure donc une fonction de refroidissement sur toute la périphérie où la couche 72 de métal liquide est susceptible de percer la paroi 11 interne de la cuve 10 par focusing effect. Un apport de fluide de refroidissement depuis le downcomer 16 apporte donc une solution particulièrement efficace pour réduire le risque de percement de la cuve par focusing effect.

De manière également avantageuse, ce mode de mise en contact de l'eau liquide avec la couche 72 de métal en surfusion, s'effectue par ruissellement depuis la paroi interne de la cuve 10, ce qui est beaucoup plus doux qu'une injection d'eau massive sur le bain de corium. Une injection massive d'eau sur le bain de corium pouvant entraîner un choc vapeur préjudiciable pour l'intégrité de la cuve du réacteur.

En figure 4, le fluide de refroidissement est représenté sous forme d'une nappe 802 étalée sur la surface libre de la couche métallique 72. Naturellement, lorsque cette dernière n'est pas encore suffisamment refroidie, le fluide de refroidissement se vaporise au contact de la couche métallique 72.

On notera qu'il est largement préférable de maintenir ouverte les vannes de dépressurisation du circuit primaire 100, afin d'évacuer la vapeur produite lors du contact du fluide de refroidissement issu du circuit secondaire 200 avec la couche 72 de métal liquide. Par ailleurs, la dépressurisation du circuit primaire 100 facilite l'injection du fluide de refroidissement du secondaire à l'intérieur de la cuve 10.

Ainsi, ce fluide de refroidissement permet de refroidir la couche 72 de métal liquide lorsque cette dernière présente une épaisseur $e_{72}$ suffisamment fine pour concentrer la puissance thermique du bain 72 sur une surface si réduite qu'elle parvienne à percer la paroi interne 11 de la cuve 10.

Le déversement de ce fluide de refroidissement se poursuit jusqu'à ce que l'épaisseur $e_{72}$ de la couche 72 de métal liquide soit suffisamment importante pour que la puissance thermique de cette couche 72 soit transmise sur une surface plus importante et donc que la puissance par unité de surface soit suffisamment faible pour empêcher le percement de la paroi interne 11 de la cuve 10.

Comme illustré en figure 4, on prévoit également un refroidissement de la paroi externe de la cuve 10. Pour cela, on peut noyer le puits 603 de cuve 10 i.e., on injecte ou on déverse de l'eau entre la cuve 10 et le puits 603. Ce refroidissement est habituellement suffisant en cas d'accident de type IVR (rétention à l'intérieur de la cuve) mais ne l'est naturellement pas si le phénomène de focusing effect apparaît.

En effet, un refroidissement par l'extérieur de la cuve en noyant le puits 603 de cuve 10, permet par exemple d'extraire 1 Mégawatts par mètre carré ($1MW/m^2$). Dans une situation de focusing effect ce refroidissement n'est plus suffisant, puisqu'il faudrait pouvoir extraire 1,5 $MW/m^2$, voire $2MW/m^2$, dans la zone dans laquelle le focusing effect opère un percement de la cuve 10.

Selon un exemple non limitatif, pour noyer le puits 603 de cuve 10, on peut utiliser l'eau contenue dans un réservoir, par exemple dans la piscine de chargement du combustible. Ce réservoir peut être situé dans le bâtiment du réacteur ou en dehors de ce dernier. De préférence, on prévoit qu'une partie au moins de ce réservoir soit disposé suffisamment en hauteur par rapport à la cuve 603 pour permettre un écoulement dans cette dernière par gravité. Le plus souvent, on prévoit qu'une partie au moins de ce réservoir se situe au-dessus du chapeau ou couvercle 20 du réacteur 1.

Selon un mode de réalisation, le débit du fluide de refroidissement issu du circuit secondaire 200 n'est pas contrôlé. Par contre, la modélisation de ce débit est facilement calculable dès lors que la pression du circuit secondaire 200, et accessoirement du circuit primaire 100, est connue. C'est principalement l'inventaire initial en eau des générateurs de vapeur 210, et la section $S_{brèche}$ de la ou des passages entre le circuit secondaire 200 et le circuit primaire 100 qui fixe la durée de refroidissement. Les calculs montrent qu'une partie assez limitée de l'inventaire total des générateurs de vapeur 210 suffit pour refroidir suffisamment la couche 72 métallique en surfusion, et éviter le percement de la cuve 10, le temps que la couche 72 métallique en surface s'épaississe suffisamment.

Typiquement, le dispositif de sécurité est configuré de sorte que la section $S_{brèche}$ de passage de la ou des passages entre le circuit secondaire 200 et le circuit primaire 100 permet à l'eau secondaire d'entrer dans la cuve 10 avec un débit inférieur à 10 kg/s et de préférence inférieur à 7 kg/s. Typiquement, ce débit est compris entre 4 et 5 kg/s pour une pression initiale (c'est-à-dire avant ouverture du ou des passages vers le circuit primaire 100) dans le générateur de vapeur (GV) de l'ordre de 68 bar.

Cela permet d'avoir un refroidissement suffisant de la couche de métal liquide sur une durée suffisamment longue pour éviter le percement de la cuve.

Selon un exemple non limitatif, afin de contrôler ce temps de refroidissement, on peut prévoir de calibrer soigneusement la section $S_{brèche}$.

Selon un exemple, $S_{brèche}$ est inférieure à $20cm^2$ ($10^{-2}$ mètres). De préférence $S_{brèche}$ est supérieure à 2 $cm^2$. Selon un exemple, $S_{brèche}$ est compris entre 2 $cm^2$ et $20cm^2$. Avantageusement il est compris entre 2 $cm^2$ et $7cm^2$.

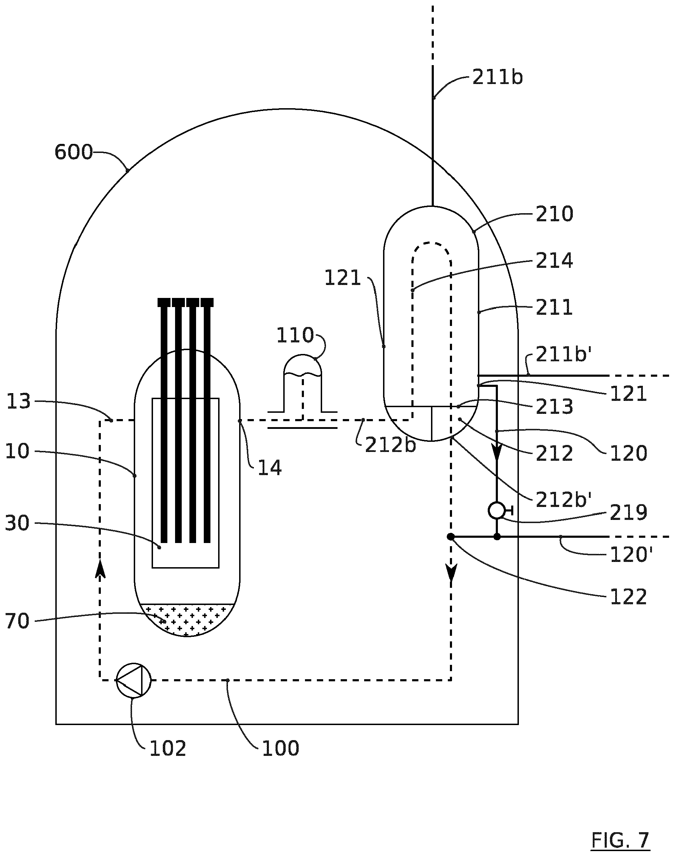

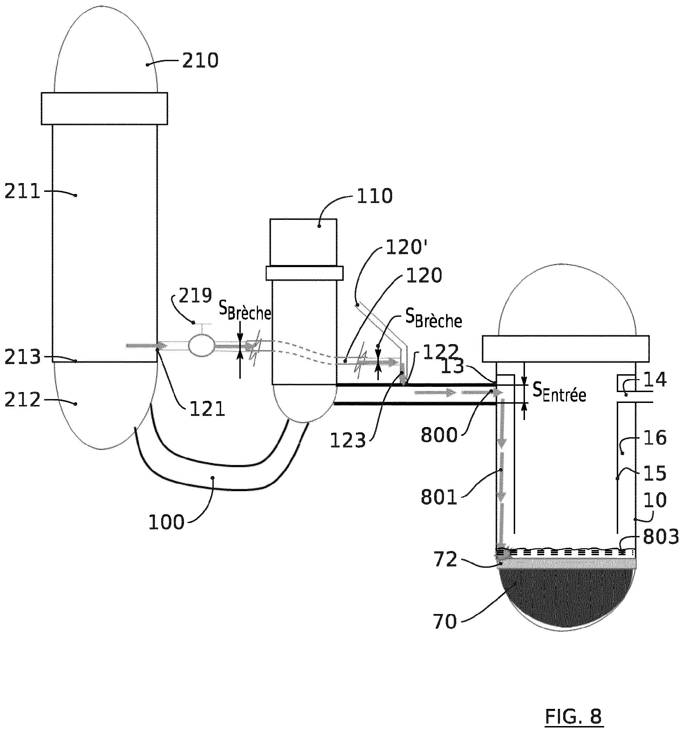

$S_{entrée}$ est la section minimale de passage entre le circuit primaire 100 et l'entrée 13 de la cuve 10. Typiquement, il s'agit donc de la section minimale de passage du fluide primaire en fonctionnement normal du réacteur. Par exemple, $S_{entrée}$ correspond à la section de l'entrée 13 dans la cuve. Cette section est illustrée en figure 8. S'il y a plusieurs entrées du circuit primaire 100 dans la cuve 10, par exemple comme illustré sur la figure 7, alors $S_{entrée}$, est la somme de toutes les entrées dans la cuve 10.

$S_{brèche}$ est la section du passage, ou la somme des sections des passages lorsqu'il y a plusieurs passages, mettant en communication fluidique le fluide secondaire présent dans l'au moins un générateur de vapeur 210 avec le circuit primaire 100.

La section d'entrée côté branche froide de la cuve réacteur est très largement supérieure à la section de la brèche provoquée entre le circuit secondaire et le circuit primaire. Typiquement, selon un exemple non limitatif $S_{brèche} < 0.05 * S_{entrée}$ et de préférence $S_{brèche} < 0.01 * S_{entrée}$ et de préférence $S_{brèche} < 0.005 * S_{entrée}$.

Typiquement, la section de passage du fluide primaire côté branche froide est de l'ordre de 6000 cm$^2$.

Typiquement, la pression de l'eau contenue dans un générateur de vapeur 210 est de l'ordre de 60 à 70 bars. Le circuit primaire 100 est quant à lui dépressurisé. En effet, des dispositifs d'ouverture de vannes au niveau du pressuriseur 110 sont actionnés pour dépressuriser le circuit primaire 100, en cas d'accident grave déclaré. Cela permet d'éviter des éjections sous pression de produits de fission du coeur en cas de percement de la cuve. Par ailleurs, cette dépressurisation du circuit primaire permet de faciliter l'injection du secondaire à l'intérieur de la cuve 30.

Dans la plupart des scenarii conduisant à l'accident grave, les circuits secondaires sont fermés et isolés, d'une part par la fermeture des lignes d'injection Vapeur conduisant à la turbine, et d'autre part par les Vannes de Décharge à l'Atmosphère.

Selon un exemple, le déclenchement du dispositif de sécurité est effectué par un opérateur. Afin de déterminer l'instant auquel il faut déclencher le déversement du fluide du circuit secondaire 200 dans le circuit primaire 100, il est avantageux de pouvoir estimer la hauteur du bain de corium et de préférence le profil de l'évolution de cette hauteur.

À cet effet, on peut prévoir un ou des fusibles 900 disposés sur la paroi de la cuve 10. Ils sont configurés de sorte à fondre lorsqu'une température seuil Tf est appliquée à ces fusibles 900. Typiquement, cette température Tf est atteinte lorsque du corium se forme dans la cuve 10 et entre au contact des fusibles 900. Lorsque la température au sein de la cuve correspond à fonctionnement normal du réacteur, les fusibles 900 ne fondent pas. Selon un exemple, Tf > 400°C, de préférence Tf $\geq$ 500°C, de préférence Tf $\geq$ 600°C,

Lorsqu'un fusible 900 fond, il empêche le passage d'un signal électrique. La résistance du circuit intégré en ce fusible est donc infinie.

Le fusible comprend une âme formée en un matériau électriquement conducteur et une gaine qui est quant à elle électriquement isolante. Ainsi, on évite un court-circuit entre la cuve métallique et l'âme conductrice.

L'âme est par exemple faite d'un métal tel que l'aluminium dont la température de fusion est voisine de 600°C, ou de l'antimoine. La gaine isolante est par exemple faite d'une céramique.

Le fusible forme par exemple un câble présentant deux extrémités reliées au dispositif de sécurité et un coude situé entre ces deux extrémités. Le coude correspond au point le plus bas du fusible. Ainsi, lorsque le fusible passe d'une configuration passante, dans laquelle le courant passe dans l'âme d'une extrémité à l'autre (résistance R1) à une configuration non-passante dans laquelle le courant ne passe plus dans l'âme d'une extrémité à l'autre (résistance R2 > R1, de préférence R2 infinie), cela signifie que le bain de corium a fait fondre le coude. On en déduit ainsi que la hauteur de la surface libre du bain de corium correspond à la hauteur du coude du fusible 900 par rapport au fond la cuve 10.

L'utilisation de fusible s'avère beaucoup plus robuste et fiable que l'utilisation de capteurs de température.

De préférence, le fusible est positionné sur la paroi interne 11 de la cuve 10. Cela permet de renforcer la fiabilité de la détection de l'apparition du Focusing effect. En effet, en plaçant le fusible sur la paroi externe de la cuve 10, la mesure de température sera essentiellement pilotée par la température d'ébullition de l'eau au contact de la paroi de cuve, ce qui ne permet pas de détecter efficacement la montée du bain de corium, ainsi que la formation de la couche de Focusing Effect.

De préférence, le dispositif de sécurité comprend une série de fusibles 900 positionnés le long d'au moins une génératrice de la paroi 11 interne de la cuve 10. De préférence, les fusibles sont positionnés le long d'au moins deux génératrices. Ainsi, si une coulée de corium intervient le long d'une génératrice, des fusibles placés en partie supérieure pourraient être atteints et ne pas caractériser la montée progressive du bain de corium en fond de cuve.

De préférence, pour chaque génératrice, une série de fusibles 900 est disposée sur une génératrice de la partie hémisphérique formant le fond 12 de de la cuve 10 cette dernière et une autre partie des fusibles est disposée sur une paroi latérale de la cuve 10.

Ces fusibles permettent de déterminer le moment auquel le bain de corium 71 commence à se former ainsi que le moment auquel il faut déclencher l'injection de l'eau du secondaire dans le circuit primaire 100.

Par exemple, en fonction du profil d'évolution de la hauteur du bain de corium, hauteur du bain de corium estimée en fonction des signaux envoyés par les fusibles, on peut, par simulation, décider quel est le moment le plus opportun pour déclencher l'injection de l'eau du secondaire dans le circuit primaire 100.

Le profil d'évolution de cette température permet également de détecter la montée du niveau de corium dans la cuve 10. Ce profil permet également de détecter le début du percement de cette dernière par la couche 72 de métal liquide.

On peut par exemple prévoir que des fusibles 900 d'une même génératrice, ou que les fusibles 900 de deux génératrices différentes, présentent des températu-

tures de fusion différents. Pour cela, on pourra prévoir des matériaux différents pour la gaine et/ou l'âme des fusibles. Il est préférable de prévoir un dispositif entièrement démontable et remplaçable, lors d'une visite décennale par exemple, afin de pouvoir disposer d'un ensemble essentiel pour la sûreté dont la durée de vie ne dépasse pas 10 ans d'exploitation réacteur.

Selon un exemple particulièrement avantageux, on souhaite positionner des détecteurs de hauteur de bain de corium de sorte à ce que la vitesse de montée du bain de corium s'exprime sur les fusibles. Cela permet de contrôler avec plus de précision à quel instant le focusing effect peut se produire et à quel instant il convient de déverser le fluide des générateurs de vapeur 210 à l'intérieur du circuit primaire 100. Ainsi, ce positionnement des fusibles 900 est effectué de sorte à ce que les volumes $V_{tranche}$ des tranches de coeur situées entre deux fusibles 900 consécutifs ou voisins sont constants.

Plus précisément, deux fusibles voisins selon une répartition verticale, définissent une tranche de cuve. Cette tranche de cuve est délimitée d'une part par la paroi 11 interne de la cuve 10 et d'autre part par deux plans verticaux, chaque plan vertical passant par l'un de ces fusibles 900 voisins. Au moins certains, de préférence tous les volumes des tranches de cuve sont identiques. De préférence, les fusibles voisins selon une répartition verticale sont disposés selon une même courbe formant de préférence une génératrice de la cuve 10.

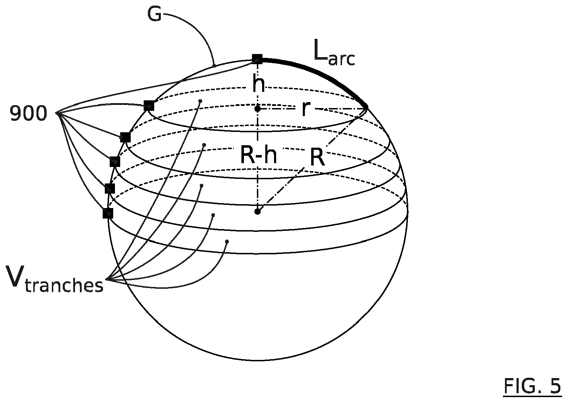

La figure 5 fait apparaître de manière très schématique une portion de la cuve 10, ainsi que des fusibles 900 disposés selon une génératrice G. Les fusibles 900 définissent des tranches de volume $V_{tranche}$ sensiblement égaux.

Ainsi, si la vitesse de formation du bain de corium (donc la vitesse de formation du volume de corium) est constante, les fusibles d'une même génératrice soient atteints par le bain de corium avec des intervalles de temps identiques entre deux fusibles successifs de cette génératrice.

En référence à la figure 5, un exemple de calcul de la position des fusibles va maintenant être décrit.

Dans cet exemple, on place les détecteurs fusibles le long de 2 à 4 génératrices réparties de manière régulière autour de l'axe du fond hémisphérique de la cuve 10. Ainsi, ainsi, pour un nombre de génératrice respectivement égal à 2, 3, et 4, ces génératrices seront séparées respectivement d'un angle de 180°, 120° et 90°.

On considère que le fond de la cuve 10 est formé par une portion de sphère, la sphère présentant un diamètre de 4 mètres.

On souhaite positionner des détecteurs de hauteur de bain de corium correspondant à 3, 6, 9, 12, et 15 m³ de corium déversé. Cela permet de déterminer le profil de montée du bain de corium. En ayant une idée précise de la variation de la vitesse de montée du bain de corium, l'opérateur (ou le dispositif automatique de sécurité) pourra déterminer quel est l'instant le plus pertinent pour déclencher l'injection de l'eau des générateurs de vapeur 210 dans le circuit primaire 100.

Le remplissage total du fond hémisphérique est de 16,75 m³.

Sur la figure 5, les paramètres suivants sont référencés :

- R= rayon de la partie hémisphérique de la cuve,
- h= hauteur du fusible par rapport au fond de la cuve,
- $L_{arc}$= longueur, le long de la paroi de la cuve, entre le fond de la cuve et la position du fusible,
- r=distance entre l'axe du cylindre de la partie cylindrique de la cuve 10 (soit l'axe, passant par le centre de la sphère et qui est perpendiculaire au plan P).

Le plan P correspond à la jonction entre la partie hémisphérique de la cuve et les parois latérales de la cuve s'étendant selon un cylindre.

Le volume $V_{calotte}$ de la partie hémisphérique de la cube peut est calculé selon l'équation suivante :

$$V_{calotte} = \frac{\pi h^2 (3R - h)}{3}$$

La position d'un fusible peut être déterminée selon la valeur $L_{arc}$ calculée selon l'équation suivante :

$$L_{arc} = \arccos\left(\frac{R - h}{R}\right) * R$$

Si l'on souhaite disposer cinq fusibles par génératrice, les fusibles peuvent être disposés de la manière suivante afin d'avoir une correspondance entre la vitesse de montée du bain de corium et la fusion de ces fusibles :

fusible N°1 : hauteur h=0.738 m; $L_{arc}$=1.776 m;
fusible N°2 : hauteur h=1.079 m; $L_{arc}$=2.185 m;
fusible N°3 : hauteur h=1.362 m; $L_{arc}$=2.492 m;
fusible N°4 : hauteur h=1.617 m; $L_{arc}$=2.756 m;
fusible N°5 : hauteur h=1.860 m; $L_{arc}$=3.002 m;

De manière alternative, on peut commander la mise en communication du circuit secondaire 200 avec le circuit primaire 100 avec un pilotage au temps à partir de l'instant où la formation du bain 71 de corium est détectée grâce aux fusibles 900.

Par simulation, on sait déterminer à l'avance que l'on dispose d'une durée D1 entre le début de la formation du bain de corium 71 et le début de la formation de la couche 72 de métal liquide à l'origine du percement de la cuve 10. Cette durée varie naturellement selon les réacteurs. Pour certains réacteurs cette durée D1 est d'environ une heure. L'opérateur activera le dispositif de sécurité à l'instant t1, avec t1= t0+(D1-k1), k1 étant un facteur de sécurité pour s'assurer que l'on déverse l'eau secondaire sur la couche 72 de métal liquide suffisamment tôt pour éviter une fragilisation trop importante de la cuve 10, et de préférence pour éviter le début du percement de la cuve. k1 est par exemple compris entre -5 minutes et 15 minutes.

Par simulation, on sait également déterminer la durée D2 entre le début de la formation du bain 71 de corium et l'instant t2 auquel la couche 72 de métal liquide présente une épaisseur $e_{72}$ suffisamment importante pour ne plus pouvoir percer la cuve 10.

On dimensionne alors la section de passage de la ou des passages entre le circuit secondaire 200 et le circuit primaire 100 de manière à pouvoir déverser, entre les instants t1 et t2, un débit Qmin suffisant au refroidissement de la couche 72 de métal liquide.

Comme indiqué ci-dessus, il est largement avantageux que le fluide 800 issu du circuit secondaire et qui se déverse sur la couche 72 de métal en surfusion descende par ruissellement le long de la paroi 11 de la cuve 10. Néanmoins, de manière alternative ou combinée à ce mode de réalisation, on peut prévoir que ce fluide 800 parvienne à l'intérieur de la cuve 10 en pénétrant dans cette dernière par l'orifice de sortie 14.

Les figures 7 à 9 illustrent différents modes de réalisation permettant d'injecter le fluide du circuit secondaire 200 dans la cuve 10, via le circuit primaire 100.

Les solutions de tous ces modes de réalisation consistent à mettre en communication le circuit secondaire 200 avec le circuit primaire 100. Cette mise en communication s'effectue grâce à un système de sécurité configuré pour rompre de manière volontaire une barrière de confinement qui isole ces deux circuits 100, 200. On rappellera qu'en fonctionnement normal c'est-à-dire en l'absence d'accidents et lors d'une phase de production d'électricité de la centrale, les circuits primaire 100 et secondaire 200 sont fluidiquement isolés l'un de l'autre.

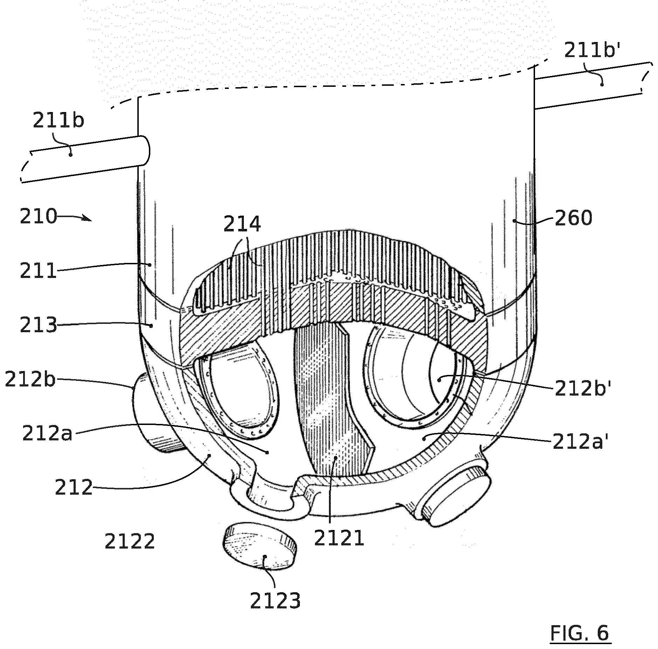

Avant de décrire en détail des exemples de solution, les paragraphes ci-dessous décrivent, en référence à la figure 6, un générateur de vapeur 210 classique. Un générateur de vapeur 210 forme une enceinte qui à la fois renferme du fluide du circuit secondaire 200 et à la fois renferme au moins un conduit 214 dans lequel circule le fluide du circuit primaire 100. Ainsi le fluide du circuit secondaire 200 vient au contact d'une paroi externe du conduit 214.

La figure 6 illustre une partie inférieure des générateurs de vapeur 210. Ce générateur de vapeur 210 comprend une enveloppe 260 de forme généralement cylindrique. Cette enveloppe 260 définit une partie supérieure 211, présentant des ouvertures 211b, 211b' en communication avec le circuit secondaire 200 et une partie inférieure 212 présentant des ouvertures 212b, 212b' en communication avec le circuit primaire 100. Les parties supérieure 211 et inférieure 212 sont séparées par une plaque 213 à tubes. Une face inférieure de la plaque 213 à tubes délimite avec la partie inférieure 212 un volume constituant une boîte à eau. La boîte à eau présente de préférence une forme hémisphérique. Elle est séparée en deux parties 212a, 212a' par une cloison 2121.

La partie 212a présente une ouverture 212b connectée hydrauliquement avec l'entrée 13 de la cuve 10. La partie 212a' présente une ouverture 212b' connectée hydrauliquement avec la sortie 14 de la cuve 10. Ainsi, les parties 212a et 212b, ainsi que les tubes 214 font partie du circuit primaire 100.

L'eau sous pression à haute température venant du coeur 30 du réacteur 1 nucléaire en sortie 14 de cuve 10 pénètre dans la partie 212a' de la boîte à eau puis circule dans les tubes 214 du faisceau de tubes du générateur de vapeur 210. La plaque 213 à tubes porte en effet une pluralité de tubes 214 dont une extrémité débouche dans la partie 212a' et dont une autre extrémité débouche dans la partie 212a. Typiquement, ces tubes 214 forment des « U » renversés. Ces tubes en « U » baignent dans l'eau du circuit secondaire 200 présente dans la partie supérieure 211 du générateur de vapeur 210.

Ainsi, l'eau chaude sous pression circule, en partant de la partie 212a' d'abord de bas en haut, jusqu'au sommet du coude du « U », puis de haut en bas pour parvenir dans la partie 212a de la boîte à eau. Sur ce trajet, l'eau circulant dans les tubes 214 cède de la chaleur au fluide du circuit secondaire 200 présent dans la partie supérieure 211 du générateur de vapeur 210. Une fois parvenue dans la partie 212a de la boîte à eau, l'eau peut ensuite s'échapper par la sortie 212b et regagner l'entrée 13 de la cuve 10 pour être à nouveau chauffée par le coeur 30.

On notera que chacune des parties 212a, 212a' de la boîte à eau est munie d'une ouverture de visite 2122 fermée par un bouchon 2123. Cette ouverture de visite 2122 présente une dimension suffisante pour qu'un homme ou un robot puisse accéder à l'intérieur de la boîte à eau.

Des premiers exemples de réalisation de l'invention vont maintenant être décrits en référence aux figures 7 et 8.

Dans ces modes de réalisation, le système de sécurité permettant une rupture volontaire de confinement hydraulique entre le circuit primaire 100 et le circuit secondaire 200 comprend au moins un passage formé par un conduit 120 reliant la partie 211 du générateur de vapeur 210 renfermant l'eau secondaire à une conduite du circuit primaire 100. Ce conduit 120 peut être une ligne d'injection de sécurité (habituellement qualifiée de « ligne IS ») ou un piquage RCV (acronyme de Circuit de contrôle Volumétrique et Chimique), ou un piquage sur le circuit de refroidissement à l'arrêt RRA. On notera que la section d'une ligne IS ou d'un piquage RCV est habituellement bien plus faible que la somme des sections des entrées 13 dans la cuve 10. Pour autant, et comme expliqué ci-dessus, l'invention fonctionne parfaitement en injectant l'eau du secondaire dans le circuit primaire 100 via une section faible.

Plus précisément, la partie supérieure 211 du générateur de vapeur 210 présente un orifice connecté à une extrémité 121 d'un conduit 120. Une autre extrémité 122 du conduit 120 est connectée, par exemple, par un piquage sur le circuit primaire 100 ou sur une ligne existante telle que la ligne IS, un piquage RCV, ou un piquage sur la ligne RRA. Naturellement, on disposera l'orifice 121 dans le fond de la partie supérieure 211 afin de privilégier un écoulement gravitaire de l'ensemble de l'eau secondaire contenu dans le générateur de vapeur 210.

Ce conduit 120 est muni d'un dispositif permettant :

- lors d'une situation de fonctionnement normal du réacteur 1, c'est-à-dire en absence d'accident, d'empêcher toute circulation du fluide secondaire en son sein,

- lors d'une situation de fonctionnement anormal du réacteur 1, entraînant le percement ou un risque de percement de la cuve 10, d'autoriser la circulation en son sein du fluide secondaire depuis le générateur de vapeur 210 jusque dans le conduit du circuit primaire 100.

Pour cela, ce dispositif est configuré pour autoriser sélectivement le passage du fluide. Selon un exemple, ce dispositif comprend une vanne 219. Dans une configuration d'isolement hydraulique, la vanne 219 empêche toute circulation de fluide dans le conduit 120.

Lorsque le système de sécurité est activé, la vanne 219 supprime cette isolation hydraulique.

Selon un premier mode de réalisation, on prévoit que la vanne 219 soit pilotable à distance entre une configuration fermée et une configuration ouverte. Le passage alternatif de la configuration fermée à la configuration ouverte s'effectuant par activation de la vanne 219. Dans ce premier mode de réalisation, lorsque le dispositif de sécurité détecte le percement ou un risque de percement éminent la cuve 10, il peut déclencher à distance l'ouverture de la vanne 219.

Selon un deuxième mode de réalisation, le passage de la configuration fermée à la configuration ouverte s'effectue manuellement, sous l'action d'un opérateur. Dans ce deuxième mode de réalisation, lorsque le dispositif de sécurité détecte le percement ou un risque de percement éminent la cuve 10, il peut déclencher un signal signifiant que la vanne 219 doit être ouverte.

Dans ce mode de réalisation avec un conduit 120 dédié entre l'enveloppe 15 du générateur de vapeur 210 côté primaire froid, et une tuyauterie du circuit primaire 100, la présence d'une branche en « U » entre le générateur de vapeur 210 et la cuve 10 ne pose pas véritablement de problèmes de remplissage de cette branche en « U ». Il est possible en effet d'assurer un écoulement gravitaire, depuis le prélèvement de l'eau secondaire dans le générateur de vapeur 210 jusqu'au piquage 122 du conduit 120 assurant l'entrée d'eau dans la branche froide principale 13 de la cuve 10, puis dans le downcomer 16, sans remontée altimétrique. Cela est illustré en figure 8.

L'altitude basse du générateur de vapeur 210 est située au-dessus de l'altitude des branches chaudes et froides de la cuve 10 et de leurs orifices 13, 14 respectifs, permettant ainsi un écoulement gravitaire depuis l'enveloppe du générateur de vapeur 210 jusqu'au sommet du downcomer 16. A l'ouverture de la vanne 219 (ou à la rupture d'un tube 214), la pression secondaire est nettement plus élevée que la pression primaire, et une détente de type adiabatique se produit au niveau de la rupture de la barrière de confinement, scindant une partie de l'eau liquide secondaire en vapeur, tandis qu'une autre partie reste liquide et s'écoule alors gravitairement, après une phase initiale de propulsion par spray induite par la force cinétique de la vapeur créée par la détente.

Dans ces modes de réalisation, dans lesquels le passage du fluide secondaire dans le circuit primaire 100 s'effectue par le conduit 120, la section $S_{brèche}$ est égale et de préférence inférieure à la section minimale de ce conduit 120. Naturellement, si plusieurs conduits 120 sont configurés pour déverser l'eau secondaire dans la cuve 10, alors $S_{brèche}$ est égale à la somme des sections de brèche équivalentes entrant en cuve 10.

Selon un mode de réalisation, on peut prévoir que le conduit 120 soit également en communication fluidique avec un réservoir de bore, par exemple via le piquage 120'.

On notera également qu'une même extrémité 122 du conduit 120 peut être connectée à plusieurs générateurs de vapeur 210. Pour cela, une portion 123 du conduit est alimentée par plusieurs branches 120, 120', chacune de ces branches étant connectée un générateur de vapeur distinct. Cela présente pour avantage de recueillir dans le circuit primaire 100 l'eau piégée dans plusieurs générateurs de vapeur 210 tout en effectuant un seul piquage 122 sur le circuit primaire 100, réduisant de ce fait l'impact de cette solution en termes de sûreté.

Sur l'exemple de la figure 7, le pressuriseur 110 est localisé entre le générateur de vapeur 210 et la sortie 14 de la cuve 10, comme cela est le cas habituellement. Dans cet exemple, le piquage 122 est localisé entre le générateur de vapeur 210 et la cuve 10.

Sur l'exemple de la figure 8, le pressuriseur 110 est localisé entre le générateur de vapeur 210 et l'entrée 13 de la cuve 10. Dans cet exemple, le piquage 122 est localisé entre le pressuriseur 110 et la cuve 10.

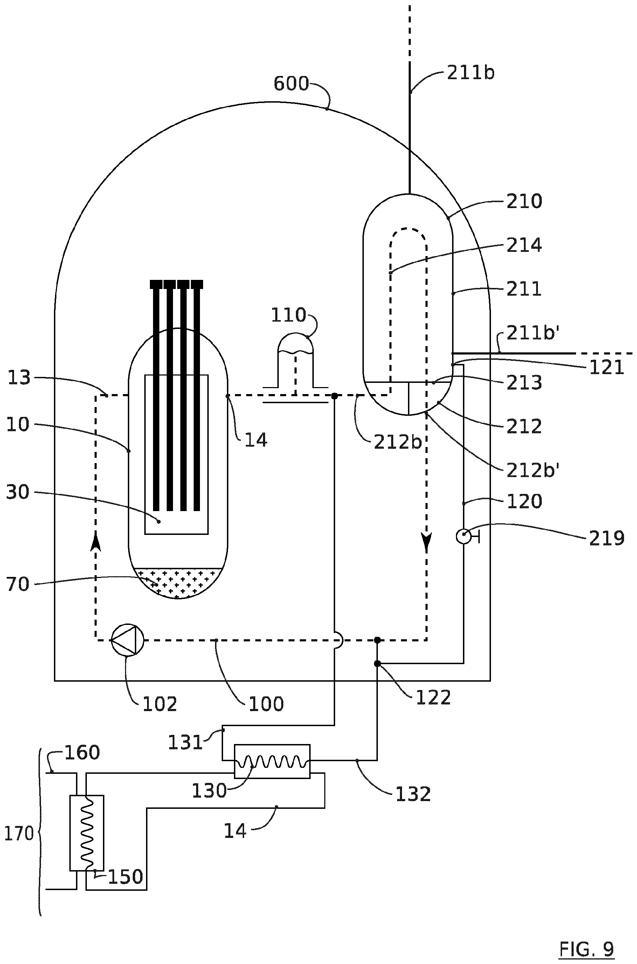

La figure 9 illustre, de manière très simplifiée, un mode de réalisation dans lequel le déversement de l'eau secondaire dans le circuit primaire 100 s'effectue par l'ajout d'un conduit aux générateurs de vapeur 210, comme dans le conduit 120 du mode de réalisation illustré sur les figures 7 et 8. Ce conduit s'étend entre une entrée 121 et une sortie 122.

Néanmoins, le piquage de ce conduit, est réalisée sur le dispositif 170 de Refroidissement du Réacteur à l'Arrêt (dispositif habituellement désigné par son acronyme RRA) afin d'éviter un perçage de la tuyauterie du circuit primaire 100.

Le dispositif 170 de RRA de la centrale comprend :

- un premier circuit comprenant un échangeur 130 dont les entrée 131 et sortie 132 sont connectées au circuit primaire 100, de préférence à des entrées froides connectées chacune à un générateur de vapeur 210 distinct. Sur l'exemple illustré, par souci de clarté, l'entrée 131 et la sortie 132 sont connectées respectivement à la branche chaude et la branche froide d'un même circuit primaire 100. De préférence, le premier circuit de ce dispositif 170 de RRA est connecté aux entrées froides de plusieurs, typiquement, de deux générateurs de vapeur 210. Ainsi, la branche 131 est connectée à l'entrée froide d'un premier générateur de vapeur 210 et la branche 132 est connectée à l'entrée froide d'un deuxième générateur de vapeur 210.
- un deuxième circuit 140 formant une boucle hydraulique en communication avec l'échangeur 130 d'une part et avec un échangeur additionnel 150 d'autre part,
- un troisième circuit externe 160 en communication avec l'échangeur additionnel 150 et comprenant une source froide.

Comme dans l'exemple précédent, ce conduit est muni d'un dispositif sélectif d'isolement hydraulique ou de mise en communication hydraulique, tel qu'une vanne 219. Cette vanne 219 peut être commandée manuellement ou à distance.

Ainsi, un avantage de ce mode de réalisation est que le système de sécurité de la présente invention ne nécessite pas d'effectuer un piquage additionnel sur le circuit primaire 100. Ce mode de réalisation permet ainsi de ne pas introduire de contraintes supplémentaires en termes de sûreté tout en apportant une solution efficace pour lutter contre le percement de la cuve par focusing effect.

Au vu de la description qui précède, il apparaît clairement que l'invention propose une solution fiable et robuste pour améliorer considérablement la sûreté d'un réacteur nucléaire de type REP, en particulier en cas de perte de réfrigérant du circuit primaire.

Avantageusement et comme décrit ci-dessus, le lieu de communication entre circuit primaire et le circuit secondaire est choisi de telle sorte que la propagation de l'eau secondaire vers le circuit primaire se produit de façon quasi exclusive côté branche froide du circuit primaire. Ainsi, l'eau des générateurs de vapeur va emprunter les branches froides primaires avant de s'écouler gravitairement dans le downcomer, là où le percement de cuve par le focusing effect s'opère.

L'invention n'est pas limitée aux modes de réalisations précédemment décrits et s'étend à tous les modes de réalisation couverts par les revendications.

Naturellement, l'invention n'est pas limitée à un réacteur présentant la structure illustrée en figure 4 et de nombreuses variantes peuvent être apportées à ce réacteur sans sortir de la portée définie par les revendications.

En particulier, seule une entrée 13 et une sortie 14 sont représentées sur les figures. De préférence, le réacteur 1 comprend plusieurs entrées et plusieurs sorties. Il comprend également de préférence plusieurs générateurs de vapeur 210.

## Revendications

1. Procédé de sécurité pour réacteur (1) nucléaire à eau pressurisée en cas de fusion au moins partielle d'un coeur (30) du réacteur (1) avec formation d'un bain (71) de corium (70), le réacteur (1) comprenant au moins, lors d'une phase de fonctionnement :

   • un circuit primaire (100) dans lequel est destiné à circuler un fluide primaire à base d'eau, le circuit primaire (100) étant configuré pour que le fluide primaire pénètre dans une cuve (10) du réacteur (1) et traverse le coeur (30) contenu dans la cuve (10) afin d'extraire de la chaleur produite par le coeur (30),
   • un circuit secondaire, dans lequel est destiné à circuler un fluide secondaire à base d'eau, le circuit secondaire (200) étant hydrauliquement isolé du circuit primaire (100), et comprenant au moins un générateur de vapeur (210), le circuit secondaire (200) étant configuré pour absorber de la chaleur du circuit primaire (100) et la transformer en partie au moins en vapeur dans le générateur de vapeur (210),

   **caractérisé en ce que** le procédé comprend au moins l'étape suivante:

   • en réponse à une détection d'un événement caractéristique d'une fusion au moins partielle du coeur (30) du réacteur (1) avec formation d'un bain (71) de corium (70) dans un fond (12) de la cuve (10) et avec une formation d'une couche (72) métallique liquide à la surface du bain (71) de corium (70) : mise en communication fluidique du circuit secondaire (200) avec le circuit primaire (100) de sorte que le fluide secondaire emprunte le circuit primaire (100) pour s'écouler à l'intérieur de la cuve (10) sur ladite couche (72) métallique liquide du bain (71) de corium (70) :

2. Procédé selon la revendication précédente dans lequel ladite détection est effectuée à l'aide d'au moins un fusible (900) disposé sur une paroi (11) de la cuve (10), l'au moins un fusible (900) étant configuré pour fondre lorsqu'il est atteint par la couche (72) métallique liquide.

**3.** Procédé selon la revendication précédente dans lequel l'au moins un fusible (900) présente une température de fusion du fusible (900) supérieure ou égal à un seuil de température Tf, avec Tf ≥ 400°C, de préférence Tf ≥ 500°C et de préférence Tf=600°C.

**4.** Procédé selon l'une quelconque des deux revendications précédentes, dans lequel le réacteur comprend plusieurs fusibles (900) répartis selon au moins une génératrice (G) d'une paroi de la cuve (10) de sorte que deux fusibles (900) voisins définissent une tranche de cuve (10), les volumes $V_{tranche}$ des tranches étant identiques.

**5.** Procédé selon l'une quelconque des revendications précédentes, dans lequel le fluide secondaire s'écoule à l'intérieur de la cuve (10) sur la couche (72) métallique liquide pendant au moins trente minutes et de préférence pendant au moins une heure et de préférence pendant au moins deux heures.

**6.** Procédé selon l'une quelconque des revendications précédentes, dans lequel le fluide secondaire s'écoule à l'intérieur de la cuve (10) avec un débit inférieur à 10 kg/s ($10^3$ grammes/secondes) et de préférence inférieur à 7 kg/s.

**7.** Réacteur (1) nucléaire à eau pressurisée, le réacteur (1) comprenant au moins :

• une cuve (10) logeant un coeur (30) du réacteur (1), la cuve (10) comprenant au moins une entrée (13) et au moins une sortie (14),
• un circuit primaire 100) dont au moins une première extrémité est connectée à l'entrée (13) de la cuve (10) et dont au moins une extrémité est connectée à la sortie (14) de la cuve (10) de sorte à ce qu'un fluide primaire circulant dans le circuit primaire (100) pénètre dans la cuve (10) du réacteur (1) par ladite entrée (13) et en ressort par ladite sortie (14) en passant à travers le coeur (30) afin d'extraire de la chaleur produite par le coeur (30), $S_{entrée}$ étant la section de l'au moins une entrée (13) du circuit primaire (100) jusque dans la cuve (10),
• un circuit secondaire (200), fluidiquement isolé du circuit primaire (100), dans lequel est destiné à circuler un fluide secondaire à base d'eau, et comprenant au moins un générateur de vapeur (210), le circuit secondaire (200) étant configuré pour absorber de la chaleur du circuit primaire (100) et la transformer en partie au moins en vapeur dans le générateur de vapeur (210),

**caractérisé en ce que** le réacteur (1) comprend un système de sécurité comprenant un dispositif de sécurité configuré pour créer au moins un, et de préférence un unique passage supprimant l'isolation fluidique entre le circuit secondaire (200) et le circuit primaire (100) et mettant en communication fluidique le fluide secondaire présent dans l'au moins un générateur de vapeur (210) avec le circuit primaire (100) de sorte à ce que le fluide secondaire contenu dans l'au moins un générateur de vapeur (200) puisse s'écouler dans la cuve (10) en passant au préalable par le circuit primaire (100), ledit passage présentant une section minimale $S_{brèche}$, telle que :

$$S_{brèche} < 0.05 * S_{entrée,}$$

de préférence $S_{brèche} < 0.01 * S_{entrée}$,
de préférence $S_{brèche} < 0.001 * S_{entrée}$

**8.** Réacteur selon la revendication précédente, dans lequel la section $S_{brèche}$ est comprise entre 0.2 cm$^2$ et 20 cm$^2$, de préférence 0.8cm$^2$ et 20 cm$^2$ et encore plus préférentiellement entre 2 cm$^2$ et 7 cm$^2$.

**9.** Réacteur selon l'une quelconque des deux revendications précédentes, comprenant au moins un fusible (900) disposé sur une paroi (11) de la cuve (10), le fusible étant configuré pour, lorsque la couche (72) métallique liquide atteint le fusible elle fasse fondre ce dernier, la température de fusion du fusible (900) étant supérieure ou égal à un seuil de température Tf, avec Tf ≥ 400°C, de préférence Tf ≥ 500°C et de préférence Tf=600°C.

**10.** Réacteur selon la revendication précédente, comprenant plusieurs fusibles (900) répartis selon au moins une génératrice (G) d'une paroi de la cuve (10), les fusibles (900) sont répartis le long d'une génératrice (G) de sorte que deux fusibles (900) voisins selon cette génératrice, définissent une tranche de cuve (10), les volumes $V_{tranche}$ des tranches sont identiques.

**11.** Réacteur selon l'une quelconque des quatre revendications précédentes, dans lequel le réacteur (1) comprend une enveloppe interne (15), située à l'intérieur de la cuve (10), enveloppant le coeur (30) et définissant avec une paroi interne (11) de la cuve (10) un volume annulaire dit downcomer (16), le downcomer (16) étant configuré de sorte à ce que, lors du fonctionnement normal du réacteur (1) :

• l'entrée (13) débouche à l'extérieur de l'enveloppe (15) et dans le downcomer (16) afin que le fluide primaire en provenance de l'entrée (13) soit guidé jusque dans le fond (12) de la cuve (10),
• la sortie (14) débouche à l'intérieur de l'enveloppe (15) afin que le fluide primaire présent dans le coeur (30) puisse sortir du réacteur (1) par la sortie (14),

le réacteur étant configuré de sorte à ce que lorsque le dispositif de sécurité crée l'au moins un passage supprimant l'isolation fluidique entre le circuit secondaire (200) et le circuit primaire (100), le fluide secondaire contenu dans le générateur de vapeur (200) s'écoule alors dans un fond (12) de la cuve (10) en passant au préalable par ladite entrée (13) de la cuve (10) puis par le downcomer (16).

12. Réacteur selon l'une quelconque des revendications 7 à 11, dans lequel le générateur de vapeur (210) comprend une enveloppe (260) externe comprenant une première partie (212) enfermant du fluide primaire et une deuxième partie (211) enfermant du fluide secondaire, les première (212) et deuxième (211) parties étant fluidiquement isolées,

le système de sécurité comprenant au moins un conduit (120), formant ledit passage, situé à l'extérieur du générateur de vapeur (210) et présentant au moins :

• une première extrémité (121) débouchant dans la deuxième (211) partie enfermant du fluide secondaire,
• une deuxième extrémité (122) débouchant dans une branche du circuit primaire (100) située entre le générateur de vapeur (210) et la cuve (10),

le dispositif de sécurité comportant au moins un organe (219) monté sur ledit conduit (120) et présentant sélectivement :

• une configuration fermée dans laquelle il empêche le passage du fluide dans ledit canal (218),
• une configuration ouverte dans laquelle il autorise le passage du fluide dans ledit conduit (120), permettant ainsi au fluide secondaire du générateur de vapeur (210) de s'écouler dans ledit conduit (120) pour rejoindre le circuit primaire (100) puis la cuve (10).

13. Réacteur selon la revendication précédente, dans lequel la deuxième extrémité (122) du conduit (120) forme un piquage sur la branche du circuit primaire (100).

14. Réacteur selon l'une quelconque des deux revendications précédentes, dans lequel ladite branche du circuit primaire (100) s'étend entre le générateur de vapeur (210) et l'entrée (13) de la cuve (10).

15. Réacteur selon l'une quelconque des trois revendications précédentes, comprenant un dispositif pris parmi une ligne d'injection de sécurité (IS) et une ligne d'un circuit de contrôle volumétrique et chimique (RCV), ledit dispositif étant configuré pour déboucher dans le circuit primaire (100) au niveau de ladite deuxième extrémité (122) du conduit (120).

16. Réacteur selon l'une quelconque des revendications 7 à 11, dans lequel le générateur de vapeur (210) comprend une première partie (212) enfermant du fluide primaire et une deuxième partie (211) enfermant du fluide secondaire, les première (212) et deuxième (211) parties étant fluidiquement isolées,

le réacteur comprenant en outre un dispositif (170) de refroidissement du réacteur à l'arrêt (RRA), le dispositif (170) de RRA comprenant au moins un premier circuit comprenant un échangeur (130) et des branches (131, 132) reliant fluidiquement l'échangeur (130) à une ou plusieurs portions du circuit primaire (100), le système de sécurité comprenant au moins un conduit (120) situé à l'extérieur du générateur de vapeur (210), formant ledit passage et présentant au moins :

• une première extrémité (121) débouchant dans la deuxième (211) partie enfermant le fluide secondaire,
• une deuxième extrémité (122) débouchant dans une branche (131, 132) dudit premier circuit du dispositif (170) de RRA,

le dispositif de sécurité comportant au moins un organe monté sur ledit conduit (120) et présentant sélectivement :

• une configuration fermée dans laquelle il empêche le passage du fluide dans ledit conduit (120),
• une configuration ouverte dans laquelle il autorise le passage du fluide dans ledit conduit (120), permettant ainsi au fluide secondaire du générateur de vapeur (210) de s'écouler dans ledit conduit (120) pour rejoindre une branche (131, 132) dudit premier circuit, puis le circuit primaire (100) puis la cuve (10)

17. Réacteur selon l'une quelconque des revendications 12 à 15, dans lequel l'organe est une vanne (219) prise parmi : une vanne à commande manuelle, une vanne pilotable à distance.

**Patentansprüche**

1. Sicherheitsverfahren für einen Druckwasserreaktor (1) im Falle der mindestens teilweisen Schmelze eines Kerns (30) des Reaktors (1) mit Bildung eines Bades (71) aus Corium (70), wobei der Reaktor (1) in einer Betriebsphase mindestens umfasst:

• einen Primärkreislauf (100), in dem ein Primärfluid auf Wasserbasis zirkulieren soll, wobei der Primärkreislauf (100) so konfiguriert ist, dass das Primärfluid in einen Behälter (10) des Reaktors (1) eintritt und den in dem Behälter (10) enthaltenen Kern (30) durchquert, um vom Kern (30) erzeugte Wärme zu entziehen,

• einen Sekundärkreislauf, in dem ein Sekundärfluid auf Wasserbasis zirkulieren soll, wobei der Sekundärkreislauf (200) hydraulisch vom Primärkreislauf (100) isoliert ist und mindestens einen Dampferzeuger (210) umfasst, wobei der Sekundärkreislauf (200) so konfiguriert ist, dass er Wärme vom Primärkreislauf (100) absorbiert und sie im Dampferzeuger (210) mindestens zum Teil in Dampf umwandelt,

**dadurch gekennzeichnet, dass** das Verfahren mindestens den folgenden Schritt umfasst:

• in Reaktion auf ein Erkennen eines Ereignisses, das für eine mindestens teilweise Schmelze des Kerns (30) des Reaktors (1) mit Bildung eines Bades (71) aus Corium (70) an einem Boden (12) des Behälters (10) und mit einer Bildung einer flüssigen Metallschicht (72) an der Oberfläche des Bades (71) aus Corium (70) kennzeichnend ist: Herstellen einer Fluidverbindung des Sekundärkreislaufs (200) mit dem Primärkreislauf (100), sodass das Sekundärfluid den Primärkreislauf (100) nimmt, um innerhalb des Behälters (10) über die flüssige Metallschicht (72) des Bades (71) aus Corium (70) zu fließen.

2. Verfahren nach dem vorstehenden Anspruch, wobei das Erkennen mithilfe mindestens einer Sicherung (900) erfolgt, die an einer Wand (11) des Behälters (10) angeordnet ist, wobei die mindestens eine Sicherung (900) so konfiguriert ist, dass sie schmilzt, wenn sie von der flüssigen Metallschicht (72) erreicht wird.

3. Verfahren nach dem vorstehenden Anspruch, wobei die mindestens eine Sicherung (900) eine Schmelztemperatur der Sicherung (900) aufweist, die größer oder gleich einer Temperaturschwelle Tf ist, wobei Tf ≥ 400 °C, vorzugsweise Tf ≥ 500 °C und vorzugsweise Tf = 600 °C.

4. Verfahren nach einem der zwei vorstehenden Ansprüche, wobei der Reaktor mehrere Sicherungen (900) umfasst, die entlang mindestens einer Mantellinie (G) einer Wand des Behälters (10) verteilt sind, sodass zwei benachbarte Sicherungen (900) eine Scheibe des Behälters (10) definieren, wobei die Volumen $V_{Scheibe}$ der Scheiben identisch sind.

5. Verfahren nach einem der vorstehenden Ansprüche, wobei das Sekundärfluid innerhalb des Behälters (10) mindestens dreißig Minuten lang und vorzugsweise mindestens eine Stunde lang und vorzugsweise mindestens zwei Stunden lang über die flüssige Metallschicht (72) fließt.

6. Verfahren nach einem der vorstehenden Ansprüche, wobei das Sekundärfluid innerhalb des Behälters (10) mit einer Strömungsrate von weniger als 10 kg/s ($10^3$ Gramm/Sekunde) und vorzugsweise weniger als 7 kg/s fließt.

7. Druckwasserreaktor (1), wobei der Reaktor (1) mindestens umfasst:

• einen Behälter (10), der einen Kern (30) des Reaktors (1) beherbergt, wobei der Behälter (10) mindestens einen Einlass (13) und mindestens einen Auslass (14) umfasst,

• einen Primärkreislauf (100), von dem mindestens ein erstes Ende mit dem Einlass (13) des Behälters (10) verbunden ist und von dem mindestens ein Ende mit dem Auslass (14) des Behälters (10) verbunden ist, sodass ein im Primärkreislauf (100) zirkulierendes Primärfluid durch den Einlass (13) in den Behälter (10) des Reaktors (1) eintritt und durch den Auslass (14) aus ihm austritt, wobei es den Kern (30) quer durchläuft, um vom Kern (30) erzeugte Wärme zu entziehen, wobei $S_{Einlass}$ der Querschnitt des mindestens einen Einlasses (13) des Primärkreislaufs (100) bis in den Behälter (10) ist,

• einen fluidisch vom Primärkreislauf (100) isolierten Sekundärkreislauf (200), in dem ein Sekundärfluid auf Wasserbasis zirkulieren soll, und der mindestens einen Dampferzeuger (210) umfasst, wobei der Sekundärkreislauf (200) so konfiguriert ist, dass er Wärme vom Primärkreislauf (100) absorbiert und sie im Dampferzeuger (210) mindestens zum Teil in Dampf umwandelt,

**dadurch gekennzeichnet, dass** der Reaktor (1) ein Sicherheitssystem umfasst, das eine Sicherheitsvorrichtung umfasst, die so konfiguriert ist, dass sie mindestens einen, und vorzugsweise einen einzigen Durchlass erzeugt, der die Fluidisolierung zwischen dem Sekundärkreislauf (200) und dem Primärkreislauf (100) aufhebt und das in dem mindestens einen Dampferzeuger (210) vorhandene Sekundärfluid mit dem Primärkreislauf (100) in Fluidverbindung bringt, sodass das in dem mindestens einen Dampferzeuger (200) enthaltene Sekundärfluid in den Behälter (10) fließen kann, wobei es zuvor durch den Primärkreislauf (100) läuft, wobei der Durchlass einen minimalen Querschnitt $S_{Durchbruch}$ wie folgt aufweist:

$$S_{Durchbruch} < 0{,}05 * S_{Einlass},$$

vorzugsweise SDurchbruch < 0,01 * SEinlass,
vorzugsweise SDurchbruch < 0,001 * SEinlass.

8. Reaktor nach dem vorstehenden Anspruch, wobei der Querschnitt $S_{Durchbruch}$ im Bereich zwischen 0,2 cm$^2$ und 20 cm$^2$, vorzugsweise 0,8 cm$^2$ und 20 cm$^2$ und noch bevorzugter zwischen 2 cm$^2$ und 7 cm$^2$ liegt.

9. Reaktor nach einem der zwei vorstehenden Ansprüche, der mindestens eine Sicherung (900) umfasst, die an einer Wand (11) des Behälters (10) angeordnet ist, wobei die Sicherung so konfiguriert ist, dass, wenn die flüssige Metallschicht (72) die Sicherung erreicht, diese sie zum Schmelzen bringt, wobei die Schmelztemperatur der Sicherung (900) größer oder gleich einer Temperaturschwelle Tf ist, wobei Tf $\geq$ 400 °C, vorzugsweise Tf $\geq$ 500 °C und vorzugsweise Tf = 600 °C.

10. Reaktor nach dem vorstehenden Anspruch, der mehrere Sicherungen (900) umfasst, die entlang mindestens einer Mantellinie (G) einer Wand des Behälters (10) verteilt sind, wobei die Sicherungen (900) so entlang einer Mantellinie (G) verteilt sind, dass zwei benachbarte Sicherungen (900) entlang dieser Mantellinie eine Scheibe des Behälters (10) definieren, wobei die Volumen $V_{Scheibe}$ der Scheiben identisch sind.

11. Reaktor nach einem der vier vorstehenden Ansprüche, wobei der Reaktor (1) eine Innenhülle (15) umfasst, die sich innerhalb des Behälters (10) befindet, den Kern (30) umhüllt und mit einer Innenwand (11) des Behälters (10) ein ringförmiges Volumen definiert, das Downcomer (16) genannt wird, wobei der Downcomer (16) so konfiguriert ist, dass im Normalbetrieb des Reaktors (1):

• der Einlass (13) außerhalb der Hülle (15) und in den Downcomer (16) mündet, damit das Primärfluid aus dem Einlass (13) bis an den Boden (12) des Behälters (10) geleitet wird,
• der Auslass (14) innerhalb der Hülle (15) mündet, damit das im Kern (30) vorhandene Primärfluid durch den Auslass (14) aus dem Reaktor (1) austreten kann,

wobei der Reaktor so konfiguriert ist, dass, wenn die Sicherheitsvorrichtung den mindestens einen Durchlass erzeugt, der die Fluidisolierung zwischen dem Sekundärkreislauf (200) und dem Primärkreislauf (100) aufhebt, das im Dampferzeuger (200) enthaltene Sekundärfluid an einen Boden (12) des Behälters (10) fließt, wobei es zuvor durch den Einlass (13) des Behälters (10) und anschließend durch den Downcomer (16) läuft.

12. Reaktor nach einem der Ansprüche 7 bis 11, wobei der Dampferzeuger (210) eine Außenhülle (260) umfasst, die einen ersten Teil (212), der Primärfluid umschließt, und einen zweiten Teil (211), der Sekundärfluid umschließt, umfasst, wobei der erste (212) und der zweite Teil (211) fluidisch isoliert sind,

wobei das Sicherheitssystem mindestens eine Leitung (120) umfasst, die den Durchlass bildet, sich außerhalb des Dampferzeugers (210) befindet und mindestens aufweist:

• ein erstes Ende (121), das in den zweiten Teil (211), der Sekundärfluid umschließt, mündet,
• ein zweites Ende (122), das in einen Zweig des Primärkreislaufs (100), der sich zwischen dem Dampferzeuger (210) und dem Behälter (10) befindet, mündet,

wobei die Sicherheitsvorrichtung mindestens ein Organ (219) umfasst, das an der Leitung (120) montiert ist und wahlweise aufweist:

• eine geschlossene Konfiguration, in der es den Durchlauf des Fluids in den Kanal (218) verhindert,
• eine offene Konfiguration, in der es den Durchlauf des Fluids in die Leitung (120) gestattet, wodurch es dem Sekundärfluid des Dampferzeugers (210) ermöglicht wird, in die Leitung (120) zu fließen, um in den Primärkreislauf (100) und anschließend in den Behälter (10) zu gelangen.

13. Reaktor nach dem vorstehenden Anspruch, wobei das zweite Ende (122) der Leitung (120) eine Abzweigung am Zweig des Primärkreislaufs (100) bildet.

14. Reaktor nach einem der zwei vorstehenden Ansprüche, wobei sich der Zweig des Primärkreislaufs (100) zwischen dem Dampferzeuger (210) und dem Einlass (13) des Behälters (10) erstreckt.

15. Reaktor nach einem der drei vorstehenden Ansprüche, der eine Vorrichtung, ausgewählt aus einer Sicherheitseinspritzleitung (IS) und einer Leitung eines Volumen- und Chemikalien-Steuerkreislaufs (RCV) umfasst, wobei die Vorrichtung so konfiguriert ist, dass sie am zweiten Ende (122) der Leitung (120) in den Primärkreislauf (100) mündet.

**16.** Reaktor nach einem der Ansprüche 7 bis 11, wobei der Dampferzeuger (210) einen ersten Teil (212), der Primärfluid umschließt, und einen zweiten Teil (211), der Sekundärfluid umschließt, umfasst, wobei der erste (212) und der zweite Teil (211) fluidisch isoliert sind,

wobei der Reaktor weiter eine Vorrichtung (170) zum Kühlen des Reaktors bei Abschaltung (RRA) umfasst, wobei die RRA-Vorrichtung (170) mindestens einen ersten Kreislauf umfasst, der einen Wärmetauscher (130) und Zweige (131, 132) umfasst, die den Wärmetauscher (130) fluidisch mit einem oder mehreren Abschnitten des Primärkreislaufs (100) verbinden, wobei das Sicherheitssystem mindestens eine Leitung (120) umfasst, die sich außerhalb des Dampferzeugers (210) befindet, den Durchlass bildet und mindestens aufweist:

• ein erstes Ende (121), das in den zweiten Teil (211), der das Sekundärfluid umschließt, mündet,
• ein zweites Ende (122), das in einen Zweig (131, 132) des ersten Kreislaufs der RRA-Vorrichtung (170) mündet,

wobei die Sicherheitsvorrichtung mindestens ein Organ umfasst, das an der Leitung (120) montiert ist und wahlweise aufweist:

• eine geschlossene Konfiguration, in der es den Durchlauf des Fluids in die Leitung (120) verhindert,
• eine offene Konfiguration, in der es den Durchlauf des Fluids in die Leitung (120) gestattet, wodurch es dem Sekundärfluid des Dampferzeugers (210) ermöglicht wird, in die Leitung (120) zu fließen, um in einen Zweig (131, 132) des ersten Kreislaufs, anschließend in den Primärkreislauf (100) und anschließend in den Behälter (10) zu gelangen.

**17.** Reaktor nach einem der Ansprüche 12 bis 15, wobei es sich bei dem Organ um ein Ventil (219) handelt, ausgewählt aus: Einem manuell betätigten Ventil, einem fernsteuerbaren Ventil.

**Claims**

**1.** A safety method for pressurised water nuclear reactor (1) in the event of at least partial meltdown of a core (30) of the reactor (1) with formation of a pool (71) of corium (70), the reactor (1) comprising at least, during an operating phase:

• a primary circuit (100) in which a water-based primary fluid is intended to circulate, the primary circuit (100) being configured so that the primary fluid enters a vessel (10) of the reactor (1) and passes through the core (30) contained in the vessel (10) in order to extract the heat produced by the core (30),
• a secondary circuit, in which a water-based secondary fluid is intended to circulate, the secondary circuit (200) being hydraulically isolated from the primary circuit (100), and comprising at least one steam generator (210), the secondary circuit (200) being configured to absorb heat from the primary circuit (100) and at least partially transform it into steam in the steam generator (210),

**characterised in that** the method comprises at least the following step:

• in response to a detection of an event characteristic of an at least partial meltdown of the core (30) of the reactor (1) with formation of a pool (71) of corium (70) in a bottom (12) of the vessel (10) and with a formation of a liquid metal layer (72) on the surface of the pool (71) of corium (70): placing the secondary circuit (200) in fluid communication with the primary circuit (100) such that the secondary fluid uses the primary circuit (100) to flow inside the vessel (10) over said liquid metal layer (72) of the pool (71) of corium (70).

**2.** The method according to the preceding claim, wherein said detection is performed using at least one fuse (900) disposed on a wall (11) of the vessel (10), the at least one fuse (900) being configured to melt when it is reached by the liquid metal layer (72).

**3.** The method according to the preceding claim, wherein the at least one fuse (900) has a melting temperature of the fuse (900) which is greater than or equal to a temperature threshold Tf, with Tf ≥ 400°C, preferably Tf ≥ 500°C and preferably Tf=600°C.

**4.** The method according to any one of the two preceding claims, wherein the reactor comprises several fuses (900) distributed along at least one generatrix (G) of a wall of the vessel (10) such that two neighbouring fuses (900) define a vessel wafer (10), the volumes $V_{wafer}$ of the wafers being identical.

**5.** The method according to any one of the preceding claims, wherein the secondary fluid flows inside the vessel (10) over the liquid metal layer (72) for at least thirty minutes and preferably for at least one hour and preferably for at least two hours.

6. The method according to any one of the preceding claims, wherein the secondary fluid flows inside the vessel (10) with a flow rate less than 10 kg/s ($10^3$ grams/second) and preferably less than at 7 kg/s.

7. A pressurised water nuclear reactor (1), the reactor (1) comprising at least:

    • one vessel (10) housing a core (30) of the reactor (1), the vessel (10) comprising at least one inlet (13) and at least one outlet (14),
    • one primary circuit (100), at least one first end of which is connected to the inlet (13) of the vessel (10) and at least one end of which is connected to the outlet (14) of the vessel (10) so that a primary fluid circulating in the primary circuit (100) enters the vessel (10) of the reactor (1) through said inlet (13) and exits it through said outlet (14) passing through the core (30) in order to extract heat produced by the core (30), $S_{inlet}$ being the section of the at least one inlet (13) of the primary circuit (100) into the vessel (10),
    • one secondary circuit (200), fluidly isolated from the primary circuit (100), in which a water-based secondary fluid is intended to circulate, and comprising at least one steam generator (210), the secondary circuit (200) being configured to absorb heat from the primary circuit (100) and at least partially transform it into steam in the steam generator (210),

    characterised in that the reactor (1) comprises a safety system comprising a safety device configured to create at least one, and preferably a single passage eliminating the fluid isolation between the secondary circuit (200) and the primary circuit (100) and placing the secondary fluid which is present in the at least one steam generator (210) in fluid communication with the primary circuit (100) so that the secondary fluid contained in the at least one steam generator (200) can flow into the vessel (10) by first passing through the primary circuit (100), said passage having a minimum section $S_{breach}$, such that:

    $$S_{breach} < 0.05 * S_{inlet},$$

    preferably $S_{breach} < 0.01 * S_{inlet}$
    preferably $S_{breach} < 0.001 * S_{inlet}$

8. A reactor according to the preceding claim, wherein the section $S_{breach}$ is comprised between 0.2 cm$^2$ and 20 cm$^2$, preferably 0.8 cm$^2$ and 20 cm$^2$ and even more preferentially between 2 cm$^2$ and 7 cm$^2$.

9. The reactor according to any one of the two preceding claims, comprising at least one fuse (900) disposed on a wall (11) of the vessel (10), the fuse being configured to, when the liquid metal layer (72) reaches the fuse it melts the latter, the melting temperature of the fuse (900) being greater than or equal to a temperature threshold Tf, with Tf ≥ 400°C, preferably Tf ≥ 500°C and preferably Tf=600°C.

10. The reactor according to the preceding claim, comprising several fuses (900) distributed along at least one generatrix (G) of a wall of the vessel (10), the fuses (900) are distributed along a generatrix (G) such that two neighbouring fuses (900), along this generatrix, define a vessel wafer (10), volumes $V_{wafer}$ of the wafers being identical.

11. The reactor according to any one of the four preceding claims, wherein the reactor (1) comprises an inner envelope (15), located inside the vessel (10), enveloping the core (30) and defining, with an inner wall (11) of the vessel (10), an annular volume called downcomer (16), the downcomer (16) being configured so that, during the normal operation of the reactor (1):

    • the inlet (13) opens outside the envelope (15) and into the downcomer (16) so that the primary fluid from the inlet (13) is guided to the bottom (12) of the vessel (10),
    • the outlet (14) opens inside the envelope (15) so that the primary fluid which is present in the core (30) can exit the reactor (1) through the outlet (14),

    the reactor being configured so that, when the safety device creates the at least one passage eliminating the fluid isolation between the secondary circuit (200) and the primary circuit (100), the secondary fluid contained in the steam generator (200) then flows into a bottom (12) of the vessel (10) by first passing through said inlet (13) of the vessel (10) then through the downcomer (16).

12. The reactor according to any one of claims 7 to 11, wherein the steam generator (210) comprises an outer envelope (260) comprising a first portion (212) enclosing the primary fluid and a second portion (211) enclosing the secondary fluid, the first (212) and second (211) portions being fluidly isolated,

    the safety system comprising at least one conduit (120), forming said passage, located outside the steam generator (210) and having at least:

    • one first end (121) opening into the second portion (211) enclosing the secondary fluid,
    • one second end (122) opening into a branch of the primary circuit (100) located between the steam generator (210) and the vessel (10),

the safety device including at least one member (219) mounted on said conduit (120) and selectively having:

 • a closed configuration in which it prevents the passage of the fluid in said channel (218),
 • an open configuration in which it enables the passage of the fluid in said conduit (120), thus allowing the secondary fluid of the steam generator (210) to flow in said conduit (120) to join the primary circuit (100) then the vessel (10).

13. The reactor according to the preceding claim, wherein the second end (122) of the conduit (120) forms a tap on the branch of the primary circuit (100).

14. The reactor according to any one of the two preceding claims, wherein said branch of the primary circuit (100) extends between the steam generator (210) and the inlet (13) of the vessel (10).

15. The reactor according to any one of the three preceding claims, comprising a device selected from a safety injection line (IS) and a line of a volumetric and chemical control circuit (RCV), said device being configured to open into the primary circuit (100) at said second end (122) of the conduit (120).

16. The reactor according to any one of claims 7 to 11, wherein the steam generator (210) comprises a first portion (212) enclosing the primary fluid and a second portion (211) enclosing the secondary fluid, the first (212) and second (211) portions being fluidly isolated,

 the reactor further comprising a device (170) for cooling the shut-down reactor (RRA), the device (170) of RRA comprising at least one first circuit comprising an exchanger (130) and branches (131, 132) fluidly connecting the exchanger (130) to one or more portions of the primary circuit (100),
 the safety system comprising at least one conduit (120) located outside the steam generator (210), forming said passage and having at least:

 • one first end (121) opening into the second portion (211) enclosing the secondary fluid,
 • one second end (122) opening into a branch (131, 132) of said first circuit of the device (170) of RRA,

 the safety device including at least one member mounted on said conduit (120) and selectively having:

 • a closed configuration in which it prevents the passage of fluid in said conduit (120),
 • an open configuration in which it enables the passage of the fluid in said conduit (120), thus allowing the secondary fluid of the steam generator (210) to flow in said conduit (120) in order to join a branch (131, 132) of said first circuit, then the primary circuit (100) then the vessel (10).

17. The reactor according to any one of claims 12 to 15, wherein the member is a valve (219) selected from: a manually operated valve, a remotely controllable valve.

FIG. 1

FIG. 2

FIG. 3A

FIG. 3B

FIG. 3C

FIG. 4

FIG. 5

211b'

211b

210

211

213

214

260

212b

212a

212

2122

212b'

212a'

2121

2123

FIG. 6

FIG. 7

FIG. 8

FIG. 9

## RÉFÉRENCES CITÉES DANS LA DESCRIPTION

**Documents brevets cités dans la description**

- WO 2009053322 A

- FR 2763168